# FASCICULE DE BREVET EUROPEEN

(11) **EP 3 032 786 B1**
(45) Date de publication et mention de la délivrance du brevet: **23.08.2017**
(21) Numéro de dépôt: 15199392.0
(22) Date de dépôt: 10.12.2015
(51) Int. Cl.: H04L 12/859, H04L 12/927, H04W 28/26, H04L 29/08, H04W 28/02, H04L 12/721

(54) **SYSTÈME ET PROCÉDÉ DE TRAITEMENT DANS UNE PLATEFORME DE TÉLÉCOMMUNICATION**
DATENVERARBEITUNGSSYSTEM UND -VERFAHREN IN EINER TELEKOMMUNIKATIONSPLATTFORM
PROCESSING SYSTEM AND METHOD IN A TELECOMMUNICATION PLATFORM

(30) Priorité: 10.12.2014 FR 1402810
(43) Date de publication de la demande: 15.06.2016
(73) Titulaire: THALES, 92400 Courbevoie (FR)
(72) Inventeur: THEBAULT, Didier, 92622 GENNEVILLIERS CEDEX (FR); CARRERE, Patrice, 92622 GENNEVILLIERS CEDEX (FR); DUBANT, Jean-Denis, 92622 GENNEVILLIERS CEDEX (FR)
(74) Mandataire: Lavoix

(56) Documents cités:
- EP-A1- 1 758 312
- US-A1- 2007 076 754
- US-A1- 2014 059 230
- US-A1- 2014 135 024

## Description

La présente invention concerne le domaine du routage des données.

Plus précisément la présente invention concerne un système de traitement pour une plateforme de télécommunication comprenant un ensemble d'applications délivrant des flux de paquets de données, un ensemble de ressources de télécommunication distinctes adaptées chacune pour télétransmettre des paquets depuis la plateforme, un routeur adapté pour recevoir des paquets en provenance de l'ensemble d'application(s) et pour délivrer des paquets reçus auxdites ressources de télécommunication pour télétransmission du paquet depuis la plateforme.

Les ressources de transmission radiofréquence présentent des bandes passantes variables, par exemple en raison d'une allocation spectrale dynamique ou de l'adaptabilité des formes d'ondes aux variations du canal de propagation dues par exemple à des atténuations météorologiques ou à du brouillage.

Par ailleurs, dans certains environnements de télécommunications comme l'aéronautique, des applications sont liées à certaines ressources de télécommunication spécifiques (radios VHF, UHF, liaisons de données tactiques) et il est fréquemment constaté un engorgement de certaines des ressources et une sous-utilisation de certaines autres des ressources. Les ressources ne sont pas forcément toutes de technologie IP (en anglais « Internet Protocol »).

La technologie IP elle-même ne permet pas nativement de garantir un niveau de qualité de service. Les flux de même type et vers un même destinataire, par exemple des flux de type phonie, sont généralement routés vers une même ressource sans distinction de leurs caractéristiques opérationnelles, comme les flux de type messagerie, de type transfert de fichiers etc. Cette limitation est encore accentuée lors de l'utilisation d'un chiffrement par exemple un chiffrement IPsec (« Internet Protocol Security », défini par l'IETF dans la RFC 2401) en amont du routage, puisque les adresses individuelles sont alors masquées par l'adresse du chiffreur/déchiffreur distant, qui est seule prise en compte pour le routage. Les techniques actuelles ne permettent pas de faire basculer automatiquement le flux sur une route alternative tant que la route initiale entre source et destinataire reste disponible au sens du routage IP.

Or certains flux ne sont opérationnellement exploitables qu'au-delà d'une qualité minimale définie par exemple notamment par une latence maximale et/ou un débit minimal etc. Par exemple, si le flux vidéo de pilotage d'un drone que le destinataire après transmission reçoit est ralenti (du fait d'une latence importante lors de sa transmission) ou se pixellise (du fait de pertes de données lors de sa transmission), il n'est alors plus possible d'utiliser ce flux reçu pour faire atterrir ou décoller le drone dans de bonnes conditions.

Des documents de l'art antérieur nécessite d'effectuer une réservation des ressources pendant tout le temps de la transmission, pour maîtriser la qualité de bout en bout, ces ressources réservées sont alors indisponibles pour les autres transmissions même si elles ne sont pas réellement utilisées.

Il est également connu du document US 2014/0135024 A1 une station de communication, telle qu'une station de base ou un point d'accès, propre à accéder à différents réseaux de type « backhaul » et distribuant des données entre les réseaux disponibles. En particulier, la station de communication comprend un module de distribution propre à piloter l'utilisation des réseaux en fonction de la demande en bande passante.

Il existe en outre des techniques de routage multi-critères, qui est approprié pour différentier des classes de flux, en nombre limité par définition, mais elles nécessitent un volume très important de données de signalisation.

Il existe donc un besoin de mieux exploiter les ressources de télécommunication disponibles dans les plateformes de télécommunication.

A cet effet, suivant un premier aspect, l'invention propose un système de traitement pour une plateforme de télécommunication du type précité caractérisé en ce qu'il est adapté pour collecter des mesures des capacités courantes de transmission des ressources de télécommunication ;
le système de traitement comportant une table et étant adapté pour déterminer, pour un flux de paquets délivré par une application de l'ensemble d'application(s), au moins un premier mode de fonctionnement et un deuxième mode de fonctionnement définissant chacun notamment des caractéristiques opérationnelles obligatoires de transmission, lesdits modes étant enregistrés dans une table en association avec un identifiant dudit flux ;
le système de traitement étant adapté pour évaluer en fonction au moins des premier et deuxième modes de fonctionnement et des mesures collectées des capacités courantes de transmission des ressources de télécommunication, celle(s) des ressources adaptées pour télétransmettre les paquets dudit flux conformément à l'un des premier et deuxième modes de fonctionnement, pour sélectionner en fonction d'au moins ladite évaluation pour ledit flux délivré par l'application, dans une première opération de sélection, un mode de fonctionnement parmi les premier et deuxième modes de fonctionnement et une
ressource de télécommunication parmi lesdites ressources et pour commander le routeur pour délivrer les paquets dudit flux à la ressource sélectionnée pour ledit flux de ladite application ;
le système de traitement étant adapté pour détecter ultérieurement, au cours de la télétransmission de paquets dudit flux de l'application par ladite ressource sélectionnée, en fonction de mesures collectées des capacités courantes de transmission de la ressource sélectionnée, toute variation de capacité courante de la ressource sélectionnée pour ledit flux de l'application rendant la télétransmission sur ladite ressource incompatible du mode de fonctionnement de l'application sélectionné pour ledit flux et pour lors d'une telle détection, déclencher une deuxième opération de sélection d'un mode de fonctionnement parmi les premier et deuxième modes de fonctionnement et d'une desdites ressources pour la télétransmission des paquets dudit flux restant à télétransmettre.

L'invention permet ainsi de pouvoir basculer sur une ressource de transmission alternative si la capacité de la ressource utilisée se réduit jusqu'à rendre inacceptable l'exploitation du flux par les utilisateurs, et ce sans attendre la rupture du lien, ou si un flux plus prioritaire est admis dans le système.

L'invention permet également de pouvoir acheminer des flux de même nature et à destination du même sous-réseau sur des ressources de transmission distinctes, en fonctions de leurs caractéristiques opérationnelles.

Dans des modes de réalisation, le système de traitement pour une plateforme de télécommunication suivant l'invention comporte en outre une ou plusieurs des caractéristiques suivantes :
- le système de traitement est adapté pour, suite à ladite détection, évaluer à nouveau en fonction au moins des premier et deuxième modes de fonctionnement et des mesures collectées des capacités courantes de transmission des ressources de télécommunication, celle(s) des ressources adaptées pour télétransmettre les paquets dudit flux restant à télétransmettre conformément à l'un des premier et deuxième modes de fonctionnement ; le système de traitement étant adapté pour, lors de la deuxième opération de sélection, sélectionner en fonction de ladite évaluation, pour ledit flux délivré par l'application, un mode de fonctionnement parmi les premier et deuxième modes de fonctionnement et une ressource de télécommunication parmi lesdites ressources ; et pour commander le routeur pour délivrer les paquets restant à transmettre du flux de l'application à la ressource sélectionnée pour ledit flux lors de la deuxième opération de sélection ;
- la ressource sélectionnée lors de la deuxième opération de sélection pour ledit flux est distincte de celle sélectionné lors de la première opération de sélection pour ledit flux et/ou le mode de fonctionnement sélectionné lors de la deuxième opération de sélection pour ledit flux est distinct de celui sélectionné lors de la première opération de sélection pour ledit flux.
- le système est adapté pour détecter au cours de la télétransmission de paquets de plusieurs flux d'application délivrés par l'ensemble d'application(s), en fonction de mesures collectées des capacités courantes de transmission, toute variation de capacité courante d'une ressource sélectionnée par ledit système de traitement pour l'un des flux rendant la télétransmission sur ladite ressource incompatible d'un mode de fonctionnement sélectionné pour ledit flux et/ou pour détecter la fin de transmission d'un autre flux pour lequel un mode de fonctionnement et une ressource de télécommunication avaient été précédemment sélectionnés, pour en réponse à une telle détection, déclencher une opération de sélection globale comprenant une nouvelle opération de sélection, pour chaque flux, d'un mode de fonctionnement qui lui est associé dans la base et d'une desdites ressources, ladite ressource issue de la nouvelle sélection ayant été évaluée par ledit système de traitement, en fonction au moins des mesures collectées, comme adaptée pour télétransmettre les paquets restant à transmettre dudit flux conformément au mode de fonctionnement issu de la nouvelle sélection ;
   le système de traitement étant adapté pour commander le routeur pour délivrer les paquets restant à transmettre de chaque flux à la ressource issue de la nouvelle sélection pour ledit flux ;
- le système est adapté pour sélectionner une ressource et un mode de fonctionnement pour un flux en fonction en outre d'une relation d'ordre des modes de fonctionnement, et/ou d'une relation d'ordre des flux et/ou des longueurs courantes des files d'attente des paquets délivrés par le routeur en entrée des ressources respectives, et/ou de données d'identification du destinataire du flux, et/ou d'informations décrivant la connectivité d'un réseau de télécommunication interfacé aux ressources de télécommunication ;
- un mode de fonctionnement définit au moins un élément parmi un débit minimum, une plage de débits admissibles comprise entre un débit minimum et un débit maximum, une latence maximale, une plage de latences admissibles comprise entre une latence minimale et une latence maximale, une gigue maximale, un coût maximal de transmission, un niveau d'ordonnancement du mode dans une échelle d'ordonnancement des modes, un niveau de sécurité, une durée de vie des données du flux ;
- le système est adapté pour télécommuniquer avec au moins un autre système de traitement d'une autre plateforme et pour échanger avec ledit autre système des messages indiquant les modes de fonctionnement et les ressources de télécommunication qui ont été sélectionnés pour les flux respectifs de paquets télétransmis depuis les plateformes respectives ;
- le système comprend un bloc applicatif et un agent de transport, ledit bloc applicatif étant adapté pour recevoir le flux de paquets délivré par l'application de l'ensemble d'application(s), pour déterminer, pour ledit flux de paquets, au moins lesdits premier mode de fonctionnement et deuxième mode de fonctionnement et pour envoyer une requête à l'agent de transport indiquant lesdits premier et deuxième modes de fonctionnement ;
   l'agent de transport étant adapté pour, sur réception d'une telle requête, effectuer ladite première sélection, en fonction des premier et deuxième modes de fonctionnement indiqués dans la requête, d'un mode de fonctionnement parmi les premier et deuxième modes de fonctionnement et d'une ressource de télécommunication, pour définir un marquage pour les paquets dudit flux, pour répondre à la requête du bloc applicatif, en indiquant au bloc applicatif ledit marquage défini pour les paquets dudit flux, et pour commander au routeur de délivrer tous les paquets portant ledit marquage à ladite ressource sélectionnée pour ledit flux ;
   ledit bloc applicatif étant adapté pour, après réception de ladite réponse marquer chaque paquet reçu dudit flux avec ledit marquage défini par l'agent de transport et pour délivrer les paquets marqués au routeur ;
- le système est destiné à une plateforme de télécommunication comprenant en outre un chiffreur et le bloc applicatif comprend une partie rouge adaptée pour traiter exclusivement les paquets de flux non chiffrés et une partie noire adaptée pour traiter exclusivement les paquets de flux chiffrés, la partie rouge du bloc applicatif étant adaptée pour recevoir le flux de paquets délivré par une application de l'ensemble d'application(s), pour déterminer, pour ledit flux de paquets, au moins lesdits premier mode de fonctionnement et deuxième mode de fonctionnement et pour envoyer une première requête à l'agent de transport indiquant lesdits premier et deuxième modes de fonctionnement ;
l'agent de transport étant adapté pour, sur réception de la première requête, effectuer ladite première sélection, en fonction des premier et deuxième modes de fonctionnement indiqués dans la première requête, d'un mode de fonctionnement parmi les premier et deuxième modes de fonctionnement et d'une ressource de télécommunication, pour définir un marquage temporaire pour les paquets dudit flux, pour stocker lesdits premier et deuxième modes de fonctionnement indiqués dans la première requête en correspondance avec ledit marquage temporaire et pour répondre à la première requête de la partie rouge du bloc applicatif, en indiquant dans une première réponse à la partie rouge, ledit marquage temporaire défini pour les paquets dudit flux, la partie rouge du bloc applicatif étant adaptée pour, après réception de ladite réponse, marquer chaque paquet reçu dudit flux avec ledit marquage temporaire défini par l'agent de transport et pour délivrer les paquets marqués au chiffreur ;
ledit chiffreur est adapté pour chiffrer les paquets délivrés par la partie rouge du bloc applicatif, pour déterminer l'adresse d'un déchiffreur destinataire en fonction de l'adresse du destinataire du flux et pour délivrer à la partie noire du bloc applicatif les paquets chiffrés indiquant en clair l'adresse du déchiffreur destinataire et le marquage temporaire ; la partie noire du bloc applicatif est adaptée pour recevoir les paquets chiffrés délivrés par le chiffreur, et pour envoyer une deuxième requête à l'agent de transport indiquant l'adresse du déchiffreur destinataire et ledit marquage temporaire ;
l'agent de transport étant adapté pour, sur réception de la deuxième requête, extraire les premier et deuxième modes de fonctionnement stockés en correspondance avec le marquage temporaire qui est indiqué dans la deuxième requête, effectuer ladite première sélection, en fonction desdits premier et deuxième modes de fonctionnement extraits et de l'adresse du déchiffreur destinataire, d'un mode de fonctionnement parmi les premier et deuxième modes de fonctionnement et d'une ressource de télécommunication, pour définir un marquage définitif pour les paquets dudit flux, pour répondre à la partie rouge et à la partie noire du bloc applicatif, en leur indiquant à chacune ledit marquage définitif pour les paquets dudit flux, et pour commander au routeur de délivrer tous les paquets portant ledit marquage définitif à ladite ressource sélectionnée pour ledit flux ;
la partie rouge du bloc applicatif étant adaptée pour, après réception du marquage définitif, marquer chaque paquet reçu dudit flux avec ledit marquage définitif et pour délivrer les paquets ainsi marqués au chiffreur ;
la partie noire du bloc applicatif étant adaptée pour, après réception du marquage définitif, remplacer par ledit marquage définitif le marquage temporaire de chaque paquet reçu dudit flux portant ledit marquage temporaire et pour délivrer au routeur les paquets ainsi marqués ainsi que les paquets portant le marquage définitif et délivrés par le chiffreur.

Suivant un deuxième aspect, la présente invention propose un procédé de traitement pour une plateforme de télécommunication comprenant un ensemble d'applications délivrant des flux de paquets de données, un ensemble de ressources de télécommunication distinctes adaptées chacune pour télétransmettre des paquets depuis la plateforme, un routeur adapté pour recevoir des paquets en provenance de l'ensemble d'application(s) et pour délivrer des paquets reçus auxdites ressources de télécommunication pour télétransmission du paquet depuis la plateforme ; ledit procédé étant caractérisé en ce qu'il comprend les étapes suivantes :
- collecte de mesures des capacités courantes de transmission des ressources de télécommunication ;
- détermination, pour un flux de paquets délivré par une application de l'ensemble d'application(s), d'au moins un premier mode de fonctionnement et d'un deuxième mode de fonctionnement définissant chacun notamment des caractéristiques opérationnelles obligatoires de transmission, lesdits modes étant enregistrés dans une table en association avec un identifiant dudit flux ;
- évaluation en fonction au moins des premier et deuxième modes de fonctionnement et des mesures collectées des capacités courantes de transmission des ressources de télécommunication, de celle(s) des ressources adaptées pour télétransmettre les paquets dudit flux conformément à l'un des premier et deuxième modes de fonctionnement ;
- sélection en fonction d'au moins ladite évaluation pour ledit flux délivré par l'application, dans une première opération de sélection, d'un mode de fonctionnement parmi les premier et deuxième modes de fonctionnement et d'une ressource de télécommunication parmi lesdites ressources et commande du routeur pour qu'il délivre les paquets dudit flux à la ressource sélectionnée pour ledit flux de ladite application ;
- ultérieurement, détection, au cours de la télétransmission de paquets dudit flux de l'application par ladite ressource sélectionnée, en fonction de mesures collectées des capacités courantes de transmission de la ressource sélectionnée, de toute variation de capacité courante de la ressource sélectionnée pour ledit flux de l'application rendant la télétransmission sur ladite ressource incompatible du mode de fonctionnement de l'application sélectionné pour ledit flux et lors d'une telle détection, déclenchement d'une deuxième opération de sélection d'un mode de fonctionnement parmi les premier et deuxième modes de fonctionnement et d'une desdites ressources pour la télétransmission des paquets dudit flux restant à télétransmettre.

Ces caractéristiques et avantages de l'invention apparaîtront à la lecture de la description qui va suivre, donnée uniquement à titre d'exemple, et faite en référence aux dessins annexés, sur lesquels :
- la figure 1 représente une plateforme de transmission dans un premier mode de réalisation de l'invention ;
- la figure 2 représente une plateforme de transmission dans un deuxième mode de réalisation de l'invention où un chiffreur est inséré dans la plateforme de transmission ;
- la figure 3 est un organigramme d'étapes d'un procédé dans un mode de réalisation de l'invention ;
- la figure 4 est un organigramme d'étapes mises en oeuvre dans le premier mode de réalisation de l'invention au cours d'une étape 102 représentée en figure 3 ;
- la figure 5 est un organigramme d'étapes mises en oeuvre dans le deuxième mode de réalisation de l'invention au cours d'une étape 102 représentée en figure 3.

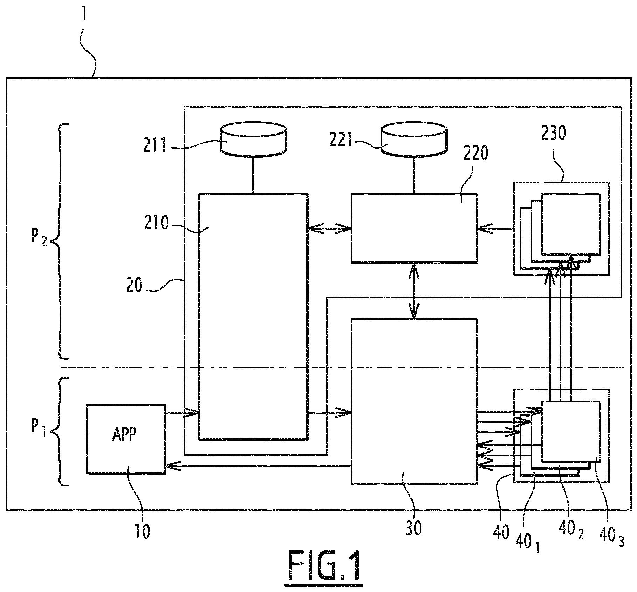

Sur la figure 1, une plateforme de télécommunication 1 dans un premier mode de réalisation de l'invention est représentée.

Cette plateforme de télécommunication 1 est embarquée par exemple dans un avion, un hélicoptère, un drone, un centre au sol etc.

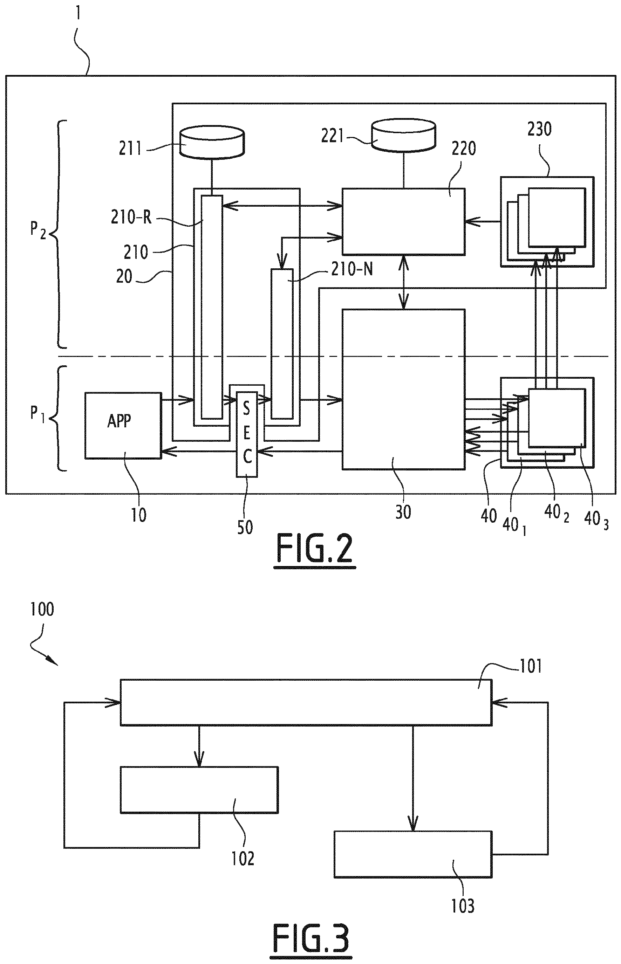

La plateforme de télécommunication 1 comporte un ensemble 10 d'application(s) logicielle(s), un système de traitement 20, un routeur 30 et un ensemble 40 de moyens de télécommunication, dont le fonctionnement est décrit ci-après en référence à la figure 1. Dans le deuxième mode de réalisation référencé à la figure 2, la plateforme de télécommunication 1 comporte en plus un chiffreur 50.

### L'ensemble 10 d'applications

L'ensemble 10 d'applications comporte une ou plusieurs applications logicielles adaptées chacune pour délivrer des flux de paquets de données.

Chaque flux est d'un type donné parmi phonie, données, image, vidéo, messagerie etc.

Dans chaque flux, la source et le destinataire du flux sont identifiés par des informations d'adressage comprenant par exemple une adresse réseau et/ou une URL et/ou une URI, un numéro de téléphone etc. Dans le cas présent, la source est l'application de la plateforme de télécommunication 1 qui génère le flux.

Les paquets d'un même flux sont issus de la même application, sont de même type, indiquent une même source et un même destinataire et sont ordonnés entre eux. Dans un mode de réalisation, ils comportent en outre l'identifiant du flux.

Dans un mode de réalisation, la plateforme 1, embarquée dans un drone, comporte par exemple une application de télépilotage basée sur une première caméra embarquée, une application de télésurveillance basée sur une deuxième caméra embarquée et une application de supervision des équipements embarqués.

L'application de télépilotage est adaptée pour capturer la vidéo de l'environnement du drone à l'aide de la première caméra embarquée sur le drone et pour transmettre en temps réel la vidéo capturée à un centre de supervision distant (se trouvant par exemple au sol). Dans le centre de supervision distant, un opérateur pilote le drone à distance à l'aide par exemple d'un joystick en fonction de la vidéo transmise ; les instructions de pilotage correspondantes sont transmises depuis le centre de supervision distant. Dans ce contexte, la vidéo capturée correspond notamment à des phases de décollage/atterrissage, et à des phases de vol intermédiaire, i.e. hors décollage/atterrissage.

L'application de télépilotage est adaptée pour déterminer si la vidéo courante capturée correspond à une phase de décollage/atterrissage, ou à une phase de vol intermédiaire

L'application de télésurveillance est adaptée pour capturer régulièrement des vidéos du paysage environnant le drone à l'aide de la deuxième caméra embarquée sur le drone et pour transmettre chacune des vidéos capturées au centre de supervision distant qui analyse le paysage filmé par la deuxième caméra et enrichit une base de données de l'environnement survolé par le drone en fonction de cette analyse.

Chaque vidéo envoyée par l'application de télépilotage ou l'application de télésurveillance correspond à un flux distinct.

L'application de supervision des équipements embarqués est par exemple adaptée pour transmettre régulièrement au centre de supervision distant des rapports indiquant l'état de chacun des modules embarqués du drone, par exemple un état fonctionnel ou un état de panne, et indiquant les dysfonctionnement rencontrés par chacun des modules.

Chaque rapport envoyé correspond à un flux distinct.

L'ensemble 10 d'application(s) est adapté pour transmettre au système de traitement 20 les flux délivrés par les applications. L'ensemble 10 d'application(s) est par exemple adaptée pour transmettre en outre l'indication du type de phase (décollage/atterrissage ou vol intermédiaire) déterminé par l'application de télépilotage pour la vidéo lorsqu'une telle vidéo est délivrée par l'application de télépilotage.

Dans d'autres modes de réalisation d'autres applications font partie de l'ensemble 10 d'applications, par exemple des applications de téléphonie avec des destinataires variés.

### L'ensemble 40 de télécommunication

L'ensemble 40 de télécommunication comprend plusieurs moyens de télécommunication au départ de la plateforme 1, constituant ainsi des solutions alternatives pour la télécommunication de paquets de données depuis la plateforme 1.

Dans le cas considéré, l'ensemble 40 de télécommunication comporte trois moyens de télécommunication distinct 40₁, 40₂, 40₃.

Par exemple le moyen de télécommunication 40₁ est une liaison radiofréquence UHF et le moyen de télécommunication 40₂ est une autre liaison radiofréquence UHF.

Le moyen de télécommunication 40₃ est une liaison satellite, par exemple de type Inmarsat 4.

Chacune de ces liaisons est au départ de la plateforme 1.

On notera que, dans des modes de réalisation, les moyens de télécommunication de l'ensemble 40 peuvent être filaires ou non-filaires. On citera notamment à titre d'exemple les ressources de télécommunication suivantes, civiles ou militaires : liaisons radio UHF, VHF, liaisons satellites, liaisons haut débit STANAG 7085, liaisons intra-patrouille par exemple en bande Ku, liaison Wifi (au sol notamment), liaisons 3G ou LTE, liaisons filaires.

Les moyens de télécommunication 40₁, 40₂, 40₃ sont par exemple reliés à un ou des réseaux de télécommunication, appelés ci-après réseau aval, avec le(s)quel(s) la plateforme 1 peut communiquer via l'ensemble 40 des moyens de télécommunication.

### Le système de traitement 20

Le système de traitement 20 comporte un bloc applicatif 210, un bloc de commande de transport 220 nommé ci-après agent de transport 220, et un bloc de surveillance 230.

Le bloc applicatif 210, comprenant par exemple un serveur, comporte une base de données 211, stockant des identifiants de flux en correspondance avec des règles de marquage ; les règles de marquage stockées en correspondance avec un identifiant de flux lui ont été fournies par l'agent de transport 220 pour ces identifiants de flux ou sont des règles de marquage provisoires à appliquer dans l'attente de celles en provenance de l'agent de transport 220 dans un mode de réalisation.

Dans les modes de réalisation où un chiffreur 50 est employé entre l'ensemble 10 d'applications et le routeur 30 comme le deuxième mode de réalisation représenté en figure 2, le bloc applicatif 210 est scindé en une partie 210-R dite rouge, adaptée pour traiter les flux avant leur chiffrement uniquement, et une partie 210-N dite noire, adaptée pour traiter les flux après leur chiffrement uniquement.

Le bloc applicatif 210, ou plus spécifiquement dans le deuxième mode de réalisation sa partie rouge 210-R, est adapté pour recevoir les flux délivrés par l'ensemble 10 d'applications, pour identifier les flux reçus et pour distinguer les paquets d'un même flux.

Le bloc applicatif 210, ou plus spécifiquement dans le deuxième mode de réalisation sa partie rouge 210-R, est adapté pour déterminer pour chaque paquet de données d'un flux qu'il reçoit, si des règles de marquage sont indiquées dans sa base de données 211 en correspondance avec l'identifiant du flux.

Dans le cas où des règles de marquage sont indiquées dans sa base de données 211, le bloc applicatif 210, ou plus spécifiquement dans le deuxième mode de réalisation sa partie rouge 210-R, est adapté pour marquer le paquet conformément aux règles de marquage stockées dans la base de données 211 pour l'identifiant de flux, et pour fournir le paquet ainsi marqué au routeur 30, ou dans le deuxième mode de réalisation au chiffreur 50, conformément par exemple à une règle de policing associée à la règle de marquage utilisée. Comme il est connu, le policing correspond à un contrôle de gabarit de trafic en entrée de réseau et comprend principalement un contrôle du débit entrant pour chacun des flux. Cette fonction de policing a pour rôle de s'assurer que le trafic envoyé sur le moyen de transmission est cohérent du mode de fonctionnement retenu par l'agent de transport. Elle opère dans le plan usager et est programmée par le bloc applicatif en fonction des paramètres du mode de fonctionnement.

Le policing peut par exemple consister à supprimer ou à retarder les paquets excédentaires mesurés par rapport à un débit maximal, à supprimer ou à retarder les paquets excédentaires mesurés par rapport à un débit moyen, etc.

Dans le cas où aucune règle de marquage n'est indiquée dans la base de données 211 pour l'identifiant de flux, le bloc applicatif 210, ou plus spécifiquement dans le deuxième mode de réalisation sa partie rouge 210-R, est adapté pour en déduire s'il s'agit d'un paquet d'un nouveau flux à transmettre (et qu'il ne s'agit pas d'un paquet inconnu qui ne doit alors pas être transmis, par exemple correspondant à un risque de déni de service ou une attaque informatique par exemple) et est alors adapté pour déterminer, pour ce nouveau flux, un ou des modes de fonctionnement opérationnels (encore appelés gabarit(s) de bon fonctionnement) associés au flux et pour fournir ce(s) modes de fonctionnement, ainsi qu'un identifiant du flux, à l'agent de transport 220 dans une requête. Le bloc applicatif 210 insère en outre dans la requête certaines au moins des informations d'adressage indiquées dans le flux, notamment celles relatives au destinataire, excepté dans les modes de réalisation où un chiffreur 50 est employé entre l'ensemble 10 d'applications et le routeur 30, car d'une part ces informations d'adressage ne sont alors pas exploitables par l'agent de transport 220 et d'autre part la fourniture de ces informations pourrait constituer une faille de sécurité.

Dans un mode de réalisation, le bloc applicatif 210, ou plus spécifiquement sa partie rouge 210-R dans le deuxième mode de réalisation, est adapté pour, tant qu'il n'a pas reçu de réponse à sa requête concernant ce nouveau flux :
- marquer les paquets reçus de ce flux, avec un marquage provisoire prédéterminé qui donnera lieu à un rejet du paquet par le routeur 30, ou
- marquer les paquets avec un marquage provisoire prédéterminé en fonction d'une politique de qualité de service temporaire, par exemple de type « best effort » et stockant l'identifiant de flux dans la base en correspondance avec l'indication du marquage provisoire, ou
- stocker les paquets reçus de ce flux et les libérer après marquage avec la règle de marquage définie par l'agent de transport 220 une fois qu'elle est reçue ;
- puis pour fournir les paquets marqués au routeur 30, ou au chiffreur 50.

Le bloc applicatif 210, ou plus spécifiquement dans le deuxième mode de réalisation sa partie rouge 210-R, est adapté pour, lorsqu'il reçoit une réponse à sa requête indiquant les règles de marquage sélectionnées par l'agent de transport 220 pour un nouveau flux identifié par son identifiant du flux, compléter sa base de données 211 avec ces informations.

Le bloc applicatif 210, ou dans le deuxième mode de réalisation sa partie rouge 210-R, est en outre adapté pour, lorsqu'il reçoit des instructions de l'agent de transport 220 indiquant un changement de règles de marquage pour un flux déjà identifié dans la base 211 par son identifiant du flux, mettre à jour sa base de données 211 avec ces nouvelles règles à la place des anciennes règles de marquage.

Dans le deuxième mode de réalisation où un chiffreur 50 est employé entre l'ensemble 10 d'applications et le routeur 30, la partie noire 210-N du bloc applicatif 210 est adaptée pour recevoir les flux délivrés par le chiffreur 50, pour identifier les flux reçus et pour distinguer les paquets d'un même flux.

Dans ce deuxième mode de réalisation, la partie noire 210-N du bloc applicatif 210 est adaptée pour déterminer pour chaque paquet de données d'un flux qu'il reçoit, si le marquage présenté par ce paquet correspond à un flux actif ou pas. Pour cela, la partie noire 210-N détermine par exemple si la règle de marquage est présente dans une liste de flux actifs maintenue par la partie noire 210-N : dans le cas positif, il s'agit d'un flux actif ; dans le cas négatif, il ne s'agit pas d'un flux actif.

Si la règle de marquage utilisée correspond à un flux actif, la partie noire 210-N du bloc applicatif 210 est adaptée pour fournir le paquet au routeur 30. Si la règle de marquage utilisée ne correspond pas à un flux actif, la partie noire 210-N du bloc applicatif 210 est adaptée pour en déduire qu'il s'agit d'un paquet d'un nouveau flux, et pour envoyer une requête à l'agent de transport 220 indiquant ladite règle de marquage, ainsi que des informations d'adressage relatives au moins au chiffreur destinataire du flux.

Dans ce deuxième mode de réalisation, la partie noire 210-N du bloc applicatif 210 est adaptée pour, lorsqu'elle reçoit une réponse à sa requête de l'agent de transport 220, considérer le nouveau flux comme un flux actif, et enregistrer les règles de marquage retenues pour ce flux actif dans sa liste des flux actifs.

Le ou les modes de fonctionnement opérationnels d'un flux sont déterminés par le bloc applicatif 210, dans le deuxième mode de réalisation plus spécifiquement par sa partie rouge 210-R, par exemple par configuration initiale du bloc applicatif 210, dans le deuxième mode de réalisation de sa partie rouge 210-R, et/ou en fonction de l'application qui l'a délivré et/ou en fonction de la plate-forme 1 et/ou en fonction de l'identifiant de source et/ou de l'identifiant de destinataire de flux indiqué(s) dans le flux et/ou en fonction de la sémantique des données du flux et/ou en fonction de règles enregistrées dynamiquement suite au déploiement d'une nouvelle capacité de traitement du flux (par exemple encodage vidéo, numérisation phonie, formatage de messages, compression de données, etc.).

Les règles nécessaires à la détermination des modes de fonctionnement opérationnels des flux sont par exemple stockées dans la base 211, par exemple en correspondance avec les identifiants des applications, des identifiants de source, et/ou des identifiants de destinataires etc.

Le(s) mode(s) de fonctionnement opérationnel(s) associé(s) à un flux caractérise(nt) ce flux sur le plan opérationnel.

Dans un mode de réalisation, un mode de fonctionnement opérationnel indique par exemple des contraintes telles que :
- une valeur de débit minimal ou une plage de débits admissibles comprise entre un débit minimal et un débit maximal et/ou
- une valeur de latence maximale ou une plage de latences admissibles comprise entre une latence minimale et une latence maximale et/ou
- une valeur de gigue maximale et/ou
- un niveau de protection à respecter lors de la transmission (par exemple utilisation exclusive de moyens de télécommunication mettant en oeuvre une capacité d'évasion de fréquence ou utilisation exclusive de moyens de télécommunications homologués à un niveau de confidentialité Restreint ou utilisation exclusive de moyens de télécommunication sous maîtrise nationale) et/ou
- un niveau de fiabilité à respecter (par exemple avec ou sans accusé de réception, avec ou sans garantie de remise) et/ou
- la durée de vie de l'information véhiculée par le flux et/ou
- un coût financier maximum de transmission du flux entre la source et le destinataire du flux dans une échelle de coût des transmissions.

Dans un mode de réalisation, des modes de fonctionnement associés à un même flux indiquent un niveau de préférence les ordonnant dans une échelle d'ordonnancement de flux et indiquant donc un ordre décroissant de préférence à partir d'un mode de fonctionnement préféré pour le flux.

Dans un mode de réalisation, un mode de fonctionnement associé à un flux indique un niveau de priorité du flux dans une échelle d'ordonnancement des flux. La priorité du flux est affectée par exemple en fonction de l'application délivrant le flux, de la source, du destinataire, de la phase de mission (par exemple décollage, transit vers théâtre, sur théâtre, en phase combat, retour de mission), etc.

Les contraintes indiquées dans un mode de fonctionnement définissent ainsi un niveau d'exploitabilité opérationnelle du flux.

Par exemple, dans le cas considéré, des modes de fonctionnement distincts sont associés à un flux délivré par l'application de télépilotage correspondant à une phase de décollage/atterrissage, et un flux délivré par l'application de télépilotage correspondant à une phase de vol intermédiaire. Par exemple, un mode de fonctionnement nominal (respectivement dégradé) pour un flux correspondant à une phase de décollage/atterrissage indiquera un niveau de débit minimal plus haut que le niveau de débit minimal indiqué pour le mode de fonctionnement nominal (respectivement dégradé) pour un flux correspondant à une phase de vol intermédiaire, et indiquera un niveau de latence maximale plus bas que le niveau de latence maximale indiqué pour le mode de fonctionnement nominal (respectivement dégradé) pour un flux correspondant à une phase de vol intermédiaire.

Dans un mode de réalisation, le mode de fonctionnement nominal associé à un flux relatif à une phase de décollage/atterrissage indique un débit minimal plus élevé que le niveau de débit minimal indiqué pour le mode de fonctionnement dégradé du flux relatif à une phase de décollage/atterrissage et/ou le mode de fonctionnement nominal associé à un flux relatif à une phase de décollage/atterrissage indique une latence maximale plus basse que la latence maximale indiquée pour le mode de fonctionnement dégradé du flux relatif à une phase de décollage/atterrissage, chacun de ces modes de fonctionnement nominal et dégradé du flux relatif à une phase de décollage/atterrissage correspondant à une restitution de la vidéo sans pixellisation, ni ralentissement. En revanche, dans un mode de réalisation, le mode de fonctionnement nominal associé à un flux relatif à une phase de vol intermédiaire correspond à une restitution de la vidéo sans pixellisation, ni ralentissement tandis que le mode de fonctionnement dégradé associé à un flux relatif à une phase de vol intermédiaire tolère une restitution de la vidéo avec un taux limité de pixellisation, et de ralentissement.

Le bloc de surveillance 230 est adapté pour collecter et actualiser des informations quantitatives et qualitatives, statiques et dynamiques relatives aux capacités de transmission de chacun des moyens de télécommunication 40₁, 40₂, 40₃ de l'ensemble 40.

Pour ce faire, le bloc de surveillance 230 comporte par exemple un proxy dédié à la supervision de chaque moyen de télécommunication et dialoguant avec ce moyen de télécommunication et/ou avec un équipement superviseur de ce moyen de télécommunication et/ou avec des capteurs chargés de mesurer régulièrement les valeurs courantes de certains paramètres relatifs à ce moyen de télécommunication.

Le bloc de surveillance 230 est ainsi adapté pour collecter pour chaque moyen de télécommunication des informations parmi :
- des mesures du débit courant de transmission, de la gigue courante et/ou de la latence courante présente(s) sur le moyen de télécommunication; ces mesures sont par exemple actualisées chaque période de durée T, avec T paramètre configurable prenant ses valeurs dans une plage allant de quelques centaines de millisecondes à plusieurs minutes ; et/ou
- des mesures de taux d'erreur permettant de caractériser la qualité du moyen de télécommunication ; et/ou
- le niveau de protection proposé par le moyen de télécommunication ; et/ou
- un niveau de fiabilité garanti ; et/ou
- un coût financier de transmission sur le moyen de télécommunication dans une échelle de coût des transmissions.

Le bloc de surveillance 230 est adapté pour fournir au fil de l'eau à l'agent de transport 220 les informations dernièrement collectées pour chaque moyen de télécommunication identifié par un identifiant de moyen de télécommunication de l'ensemble 40.

L'agent de transport 220 comporte une base de données 221.

La base de données 221 est adaptée pour stocker des identifiants de flux et pour stocker en correspondance de chaque identifiant de flux, un ou des modes opérationnels associé(s), pour indiquer en outre si un de ces modes opérationnels est actuellement sélectionné et pour identifier en outre un moyen de télécommunication sélectionné pour ledit flux. Les flux pour lesquels un mode de fonctionnement et un moyen de télécommunication sont sélectionnés sont dits flux actifs.

L'agent de transport 220 est adapté pour recevoir au fil de l'eau les informations actualisées relatives aux capacités courantes de transmission et pour les stocker dans la base de données 221 en correspondance avec un identifiant de chaque moyen de télécommunication de l'ensemble 40.

L'agent de transport 220 est notamment adapté pour déduire de ces informations actualisées quels sont les moyens de télécommunication actuellement disponibles pour transporter des flux supplémentaires et quelles caractéristiques de transmission ces moyens de télécommunication garantissent.

L'agent de transport 220 est adapté pour collecter auprès du routeur 30 :
- des informations de connectivité actualisées relatives aux routes de télécommunication du réseau aval interfacé avec l'ensemble 40 des moyens de télécommunication (permettant à l'agent de transport de déterminer les routes qui donnent accès à un destinataire) et/ou
- l'état courant des files d'attente des paquets routés par le routeur 30 vers chacun des moyens de télécommunication 40₁, 40₂, 40₃ et non encore transmis par ces moyens.

L'agent de transport 220 est adapté pour recevoir des requêtes, en provenance du bloc applicatif 210 et indiquant un ou des modes de fonctionnement opérationnels associés à un nouveau flux identifié par son identifiant de flux figurant également dans la requête, ainsi que des informations d'adressage relatives au moins au destinataire du flux.

Sur réception d'une telle requête en provenance du bloc applicatif 210, l'agent de transport 220 est adapté pour évaluer en fonction au moins des modes de fonctionnement du nouveau flux et de la capacité courante des moyens de télécommunication 40₁, 40₂, 40₃, et dans des modes de réalisation en fonction en outre des informations actualisées de connectivité et/ou d'états courants des files d'attente, celui des moyens de télécommunication adapté pour télétransmettre les paquets dudit flux conformément à l'un des modes de fonctionnement du flux.

De façon plus détaillée, dans le deuxième mode de réalisation où un chiffreur 50 est employé entre l'ensemble 10 d'applications et le routeur 30, l'agent de transport 220 est adapté pour recevoir des requêtes, en provenance de la partie rouge 210-R du bloc applicatif 210 et indiquant un ou des modes de fonctionnement opérationnels associés à un nouveau flux identifié par son identifiant de flux figurant également dans la requête.

Dans ce mode de réalisation, sur réception d'une telle requête en provenance de la partie rouge 210-R du bloc applicatif 210, l'agent de transport 220 est adapté pour déterminer un marquage temporaire pour le nouveau flux, pour stocker la requête relative au nouveau flux en utilisant le marquage temporaire comme clé de stockage, et pour répondre à la requête de la partie rouge 210-R relative au nouveau flux en indiquant la règle de marquage temporaire.

L'agent de transport 220 est adapté pour recevoir des requêtes, en provenance de la partie noire 210-N du bloc applicatif 210 et indiquant le marquage temporaire, ainsi que des informations d'adressage relatives au moins au chiffreur destinataire du flux.

Dans ce deuxième mode de réalisation, sur réception d'une telle requête en provenance de la partie noire 210-N du bloc applicatif 210, l'agent de transport 220 est adapté pour récupérer, à partir du marquage temporaire, la requête associée stockée venant de la partie rouge 210-R du bloc applicatif 210, et pour évaluer en fonction au moins des modes de fonctionnement du nouveau flux et de la capacité courante des moyens de télécommunication 40₁, 40₂, 40₃, de l'adresse du chiffreur destinataire, et dans des modes de réalisation en fonction en outre des informations actualisées de connectivité et/ou d'états courants des files d'attente, celui des moyens de télécommunication adapté pour télétransmettre au chiffreur destinataire les paquets dudit flux conformément à l'un des modes de fonctionnement du flux.

Dans le premier ou deuxième mode de réalisation, l'agent de transport 220 est par exemple adapté pour évaluer de façon globale, en fonction au moins des modes de fonctionnement des flux actifs et du nouveau flux et de la capacité courante des moyens de télécommunication 40₁, 40₂, 40₃, et dans des modes de réalisation en fonction en outre des informations actualisées de connectivité et/ou d'états courant des files d'attente, les moyens de télécommunication i.e. soit les moyens 40₁, les moyens 40₂ ou bien les moyens 40₃ qui sont les plus adaptés pour télétransmettre les paquets de chacun de ces flux conformément à l'un des modes de fonctionnement dudit flux.

Les ordres entre les modes de fonctionnement associés à un même flux et les niveaux de priorité respectifs des flux sont pris en compte par l'agent de transport 220 pour effectuer cette sélection.

En fonction de cette évaluation, l'agent de transport 220 est adapté pour sélectionner au moins un mode de fonctionnement associé au nouveau flux et un moyen de télécommunication (en tant que le meilleur moyen de télécommunication et meilleur mode de fonctionnement d'un algorithme d'évaluation et de sélection) en respectant la contrainte selon laquelle le moyen de télécommunication sélectionné doit être compatible du mode de fonctionnement sélectionné pour le nouveau flux. Cette sélection est effectuée par l'agent de transport 220 en fonction des flux actifs listés dans la base de données 221 et des modes de fonctionnement qui leur sont associés, en fonction des informations actualisées relatives aux capacités courantes de transmission des moyens de télécommunication 40₁, 40₂, 40₃ et en outre, dans des modes de réalisation en fonction des moyens de télécommunication disponibles, des informations de connectivité actualisées et/ou de l'état courant des files d'attente des paquets collecté auprès du routeur et/ou des informations d'adressage des flux actifs.

On entend par « compatible » dans l'expression « un moyen de télécommunication sélectionné compatible d'un mode de fonctionnement sélectionné pour un flux » que l'agent de transport a évalué qu'en fonction de l'ensemble des informations actualisées indiquées dont il a été tenu compte (capacités de transmission et/ou connectivité et/ou états des files d'attente), le transport des paquets du flux transmis via le moyen de télécommunication sélectionné va bien pouvoir respecter les contraintes de transmission vers le destinataire telles qu'elles sont fixées dans le mode de fonctionnement sélectionné.

Les informations de connectivité vont notamment permettre de définir des routes possibles jusqu'au destinataire, et d'en déduire quels moyens de télécommunication de l'ensemble 40 donnent accès à ces routes, de déterminer si certaines de ces routes définies sont compatibles d'un mode de fonctionnement d'un flux etc.

Différents algorithmes d'évaluation et sélection peuvent être utilisés par l'homme du métier : ils définissent chacun une « meilleure » solution, par exemple en choisissant parmi tous les moyens de télécommunication compatibles celui qui restera le moins chargé (en proportion ou en valeur absolue) après sélection du moyen et/ou celui qui générera le moins de coûts financiers et/ou celui qui offrira la latence la plus basse.

L'agent de transport 220 est alors adapté pour renseigner la base de données 221 avec l'identifiant du nouveau flux, les modes de fonctionnement associés et l'indication de celui actuellement sélectionné, ainsi que l'identifiant du moyen de télécommunication actuellement sélectionné pour ce nouveau flux.

L'agent de transport 220 est ensuite adapté pour définir des règles de marquage des paquets du nouveau flux et pour les stocker dans la base 221 en association avec l'identifiant du nouveau flux.

Puis l'agent de transport 220 est adapté pour répondre à la requête du bloc applicatif 210, plus spécifiquement dans le deuxième mode de réalisation de sa partie rouge 210-R, relative au nouveau flux en lui indiquant les règles de marquage ainsi définies suite à l'étape d'évaluation et de sélection décrite ci-dessus pour le nouveau flux identifié par son identifiant du flux, ainsi que le mode de fonctionnement finalement sélectionné pour ce flux.

Dans le deuxième mode de réalisation, l'agent de transport 220 est adapté pour acquitter la requête de la partie noire 210-N du bloc applicatif 210 en lui fournissant en réponse le marquage temporaire du nouveau flux et le marquage défini pour le nouveau flux après l'étape d'évaluation et de sélection du mode de fonctionnement et des moyens de télécommunication.

L'agent de transport est en outre adapté pour transmettre une commande au routeur 30 commandant de délivrer dorénavant au moyen de télécommunication sélectionné pour le nouveau flux tous les paquets portant un marquage conforme aux règles de marquage définies pour le nouveau flux.

Au cas où il n'a pas été possible pour l'agent de transport 220 de sélectionner pour le nouveau flux un mode de fonctionnement et un moyen de télécommunication, l'agent de transport 220 est adapté pour répondre à la requête du bloc applicatif 210 en indiquant que le service de télécommunication n'est pas disponible. Les paquets du nouveau flux seront alors rejetés par le bloc applicatif 210. Dans un autre mode de réalisation, s'il n'a pas été possible pour l'agent de transport 220 de sélectionner pour le nouveau flux un mode de fonctionnement et un moyen de télécommunication, l'agent de transport 220 est adapté pour répondre à la requête du bloc adaptatif 210 en indiquant, pour le nouveau flux, une règle de marquage prédéterminée qui donnera lieu à un rejet du paquet par le routeur 30.

On notera que lors des opérations d'évaluation et de sélection consécutives à la réception d'une requête du bloc applicatif 210 relative à un nouveau flux, l'agent de transport 220 est parfois conduit à changer le mode de fonctionnement sélectionné et/ou le moyen de télécommunication alors sélectionné pour un flux déjà actif, voire à identifier que la transmission d'un flux jusqu'alors actif ne peut plus continuer (par exemple si ce flux a une priorité inférieure à tous les autres flux y compris le nouveau flux, et que les capacités courantes ne sont pas suffisantes pour transmettre chacun de ces flux conformément à l'un de ses modes de fonctionnement associés).

Dans un tel cas, l'agent de transport 220 est adapté pour actualiser sa base de données 221 en fonction de ces changements relatifs aux moyens de transmission 40₁, 40₂, 40₃ et/ou aux modes de fonctionnement sélectionnés.

Lorsque le moyen de télécommunication jusqu'alors sélectionné d'un flux actif n'est plus sélectionné pour ce flux, l'agent de transport fournit au bloc applicatif 210 et/ou au routeur 30 les instructions nécessaires pour que les futurs paquets de ce flux actif reçus par l'agent applicatif soient bien traités conformément aux résultats de la dernière opération de sélection : par exemple l'agent de transport 220 commande au bloc applicatif 210 de modifier le policing à appliquer sur les paquets du flux ainsi que le marquage, le nouveau marquage identifiant le nouveau moyen de transmission sélectionné pour ce flux actif le cas échéant ou indiquant un rejet et/ou par exemple l'agent de transport 220 reprogramme le routeur 30 pour que les paquets marqués dudit flux actif soit bien routés comme définis lors de la dernière opération de sélection etc.

Si aucun paquet d'un flux réputé actif n'est reçu sur une certaine période (configurable en fonction du flux entre quelques dizaines de secondes et plusieurs minutes), le flux est alors considéré inactif.

Par ailleurs, sur désactivation d'un service, tous les flux de ce service sont rendus inactifs.

Dans les deux cas, ceci se traduit par une requête de suppression de flux depuis le bloc applicatif 210 vers l'agent de transport 220. Sur réception d'une requête de suppression de flux, l'agent de transport 220 est adapté pour réévaluer les moyens de télécommunication qui sont les plus adaptés pour télétransmettre les paquets de chacun des flux encore actifs conformément à l'un des modes de fonctionnement desdits flux. Cette réévaluation conforme aux principes exposés ci-dessus peut par exemple avoir pour effet de passer d'un mode de fonctionnement dégradé à un mode de fonctionnement nominal pour un des flux actifs.

L'agent de transport 220 est en outre adapté pour détecter, en fonction des informations actualisées reçues relatives aux capacités courantes de transmission, et/ou à la connectivité et/ou à l'état courant des files d'attente, toute variation des capacités courantes des moyens de transmission, et dans des modes de réalisation toute variation de connectivité ou d'état de file d'attente, et adapté pour déterminer si ces variations détectées induisent qu'un mode de fonctionnement sélectionné pour un flux actif n'est plus compatible d'un transport du flux à destination du destinataire du flux via le moyen de télécommunication sélectionné pour ce flux actif.

Dans un tel cas, l'agent de transport 220 effectue une nouvelle opération d'évaluation des modes de fonctionnement des flux actifs et des moyens de télécommunication pour effectuer une nouvelle sélection, pour chaque flux actif, d'un mode de fonctionnement et d'un moyen de télécommunication pour transmettre les paquets du flux actif restant à transmettre, tel qu'un moyen de télécommunication sélectionné pour un flux est compatible du mode de fonctionnement sélectionné pour ce flux. L'agent de transport 220 met à jour sa base 221 en fonction des résultats de cette nouvelle opération d'évaluation et de sélection.

Si le résultat de cette nouvelle opération d'évaluation et de sélection doit, pour pouvoir diriger des paquets vers les moyens de télécommunication 40₁, 40₂, 40₃ respectivement sélectionnés ou pour rejeter des paquets de flux pour lesquels il n'a pas pu être sélectionné un mode de fonctionnement et un moyen de télétransmission, donner lieu à de nouvelles règles de marquage et/ou à une reprogrammation du routeur 30, les instructions correspondantes sont fournies par l'agent de transport 220 au bloc applicatif 210 (aux parties rouge et noire du bloc applicatif dans le deuxième mode de réalisation) et/ou au routeur 30.

### Le routeur 30

Le routeur 30 est adapté pour recevoir les paquets de données qui lui sont fournis par le bloc applicatif 210, ou dans le deuxième mode de réalisation par la partie noire 210-N du bloc applicatif 210.

Le routeur 30 est adapté pour recevoir des commandes en provenance de l'agent de transport 220 et pour appliquer ces commandes. Ces commandes lui indiquent au moins un marquage et lui spécifie vers quel moyen de télécommunication 40₁ ou 40₂ ou 40₃ un paquet présentant un tel marquage doit être sélectivement dirigé. Ainsi le routeur 30 est adapté pour diriger chaque paquet qu'il reçoit vers le moyen de télécommunication alors sélectionné par l'agent de transport 220 pour le flux actif dont le paquet fait partie, ou pour le rejeter si telle a été la décision de l'agent de transport 220.

### Le chiffreur 50

Le chiffreur 50 utilisé dans le deuxième mode de réalisation est adapté pour recevoir les paquets de données qui lui sont fournis par la partie rouge 210-R du bloc applicatif 210, pour appliquer une fonction de chiffrement sur ces paquets, et pour transmettre ces paquets une fois chiffrés à la partie noire 210-N du bloc applicatif 210.

Après passage d'un paquet dans le chiffreur, le contenu du paquet, y compris l'adresse du destinataire est chiffrée. Il indique dans le paquet, en clair, le marquage du paquet précédemment effectué par le bloc applicatif 210 (par sa partie rouge 210-R de ce bloc applicatif dans le deuxième mode de réalisation) et l'adresse du chiffreur destinataire que le chiffreur détermine en fonction de l'adresse du destinataire indiquée dans le paquet.

Dans un mode de réalisation, le champ DSCP du protocole IP (version v4 ou v6), ou le champ Flow Label du protocole IPv6, ou un port TCP/UDP, ou une extension de l'en-tête applicative telle que l'en-tête SOAP, est utilisé(e) par le bloc applicatif 210 pour marquer les paquets d'un flux, la règle de routage définie pour le flux stipulant l'insertion, par le bloc applicatif 210, dans un tel champ de chaque paquet du flux, d'un identifiant, par exemple du moyen de télécommunication sélectionné. Dans un tel cas, le routeur 30 est programmé par l'agent de transport 220 pour qu'il délivre tout paquet dont ce champ comporte cet identifiant au moyen de télécommunication que l'agent de transport a sélectionné pour ce flux. Plus largement, l'identifiant inséré doit permettre au routeur de reconnaître les paquets du flux : cet identifiant peut effectivement faire référence au moyen de télécommunication sélectionné, mais peut aussi faire référence au flux lui-même voire à une valeur arbitraire choisie par l'agent de transport 220 ; l'identifiant est simplement une clé permettant au routeur 30 de reconnaître les paquets du flux pour leur appliquer la règle de routage programmée.

Dans des modes de réalisation, l'agent de transport 220 est adapté pour informer le bloc applicatif 210 de la sélection d'un mode de fonctionnement pour un flux nouveau ou d'un changement de mode de fonctionnement sélectionné pour un flux déjà actif, et le bloc applicatif 210 est adapté pour en fonction de ces informations, déclencher des actions telles que changement du codec utilisé par l'application ayant délivré le flux, changement du format des messages constituant le flux, programmation d'une fonction de vérification des caractéristiques du flux.

La solution proposée selon l'invention consiste ainsi à introduire un plan de contrôle et de gestion applicatif local à la plateforme 1 en surcouche (en anglais « overlay ») sur le plan usager, ledit plan usager comprenant l'ensemble 10 d'applications, le routeur 30 et l'ensemble 40 de moyens de télécommunication. Dans un mode de réalisation, les échanges entre le plan usager et le plan de contrôle sont contrôlés par des passerelles de sécurité visant à garantir la maîtrise de ces échanges et à s'assurer que seules les informations nécessaires sont échangées.

On notera que la plateforme de télécommunication 1 comporte en outre au moins un microprocesseur et une mémoire stockant des instructions logicielles (non représentés), l'exécution desdites instructions logicielles sur le microprocesseur donnant lieu aux étapes mises en oeuvre par le système de traitement 20 et par le routeur 30.

La présente invention propose aussi un procédé de traitement comprenant les étapes mises en oeuvre par une plateforme telle que la plateforme de télécommunication 1.

Dans un mode de réalisation d'un tel procédé de traitement, en référence à la figure 3, un ensemble 100 d'étapes comprend des étapes 101, 102 et 103 mises en oeuvre par le système de routage applicatif 20.

Dans une étape 101 qui est réalisée en permanence, les opérations suivantes sont menées :
- réception de flux par le bloc applicatif 210, marquage par le bloc applicatif 210 des paquets des flux reçus conformément aux règles de marquage définies pour les identifiants de ces flux dans sa base 211 de la façon décrite plus haut et fourniture des paquets marqués au routeur 30, par exemple conformément à une règle de policing associée à la règle de marquage utilisée ;
- si le bloc applicatif 210 détecte un paquet d'un nouveau flux, l'étape 102 est mise en oeuvre ;
- pour chaque paquet marqué par le bloc applicatif 210 que le routeur 30 reçoit en provenance du bloc applicatif 210, rejet ou routage par le routeur 30 vers un moyen de transmission spécifique en fonction du marquage présenté par le paquet et de la programmation antérieure du routeur par l'agent de transport 220 (chaque marquage étant associé à un moyen de transmission respectif ou au rejet) ;
- collecte par le bloc de surveillance 230 des informations actualisées quantitatives et qualitatives, statiques et dynamiques relatives aux capacités de transmission de chacun des moyens de télécommunication 40₁, 40₂, 40₃ et fourniture desdites informations à l'agent de transport 220 ;
- collecte par l'agent de transport 220 des informations de connectivité actualisées et de l'état courant des files d'attente ;
- analyse des informations actualisées reçues relatives aux capacités courantes de transmission, et/ou à la connectivité et/ou à l'état courant des files d'attente par l'agent de transport 220 et détection par l'agent de transport 220, de variations des capacités courantes des moyens de transmission, de connectivité et d'état courant des files d'attente ; dès que l'agent de transport 220 détermine qu'une telle variation détectée fait qu'un mode de fonctionnement sélectionné pour un flux actif n'est plus compatible d'un transport via le moyen de télécommunication sélectionné pour ce flux actif, l'étape 103 est mise en oeuvre ;
- chacun des moyens de télétransmission 40₁, 40₂, 40₃ télétransmet les paquets qui lui sont adressés par le routeur 30.

Dans l'étape 102, étape ponctuelle qui a lieu suite à la détection par le bloc applicatif 210 d'un paquet d'un flux dont l'identifiant de flux n'est pas présent dans sa base 211 :
- le bloc applicatif 210 détermine, pour ce nouveau flux, un ou des modes de fonctionnement opérationnels associés au nouveau flux et fournit ce(s) modes de fonctionnement, ainsi qu'un identifiant du nouveau flux, à l'agent de transport 220 et des informations d'adressage du destinataire ou du chiffreur du destinataire ;
- suite à la réception de ces éléments, l'agent de transport 220 sélectionne en fonction au moins des modes de fonctionnement du nouveau flux, des informations d'adressage du destinataire ou du chiffreur du destinataire, de la capacité courante des moyens de télécommunication et optionnellement en fonction des informations actualisées de connectivité, et, optionnellement en fonction des informations actualisées d'état courant des files d'attente, un des moyens de télécommunication et un mode de fonctionnement associé au nouveau flux tel que le moyen de télécommunication sélectionné est compatible d'une télétransmission des paquets dudit flux conformément au mode de fonctionnement sélectionné du flux ;
- l'agent de transport 220 renseigne la base de données 221 avec l'identifiant du nouveau flux, les modes de fonctionnement associés et l'indication de celui actuellement sélectionné, ainsi que l'identifiant du moyen de télécommunication actuellement sélectionné, puis définit des règles de marquage des paquets du nouveau flux et les stocke dans la base 221 en association avec l'identifiant du nouveau flux ; l'agent de transport 220 répond à la requête du bloc applicatif 210 relative au nouveau flux en lui indiquant les règles de marquage définies pour le nouveau flux ;

- l'agent de transport 220 transmet une commande au routeur 30 commandant de délivrer dorénavant au moyen de télécommunication sélectionné pour le nouveau flux tous les paquets portant un marquage conforme aux règles de marquage définies pour le nouveau flux ;
- le bloc applicatif 210 lorsqu'il reçoit la réponse à sa requête relative au nouveau flux, complète sa base de données 211 avec les règles de marquage indiquées dans la réponse pour l'identifiant du flux et marque dorénavant tout paquet du nouveau flux conformément aux règles de marquage commandées par l'agent de transport et stockées dans la base 211.

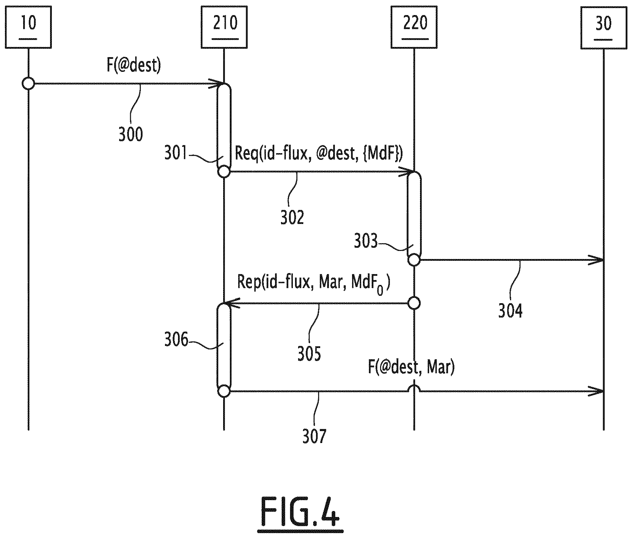

Des étapes mises en oeuvre lors de l'étape 102 par une plateforme dans un premier mode de réalisation telle que représentée en figure 1, sans chiffreur, sont représentées en figure 4 et décrites ci-dessous.

Après une étape 300 de transmission par l'ensemble d'application(s) 10 au bloc applicatif 210 d'un nouveau flux F adressé au destinataire dest-R d'adresse @dest-R indiquée dans le flux, le bloc applicatif 210 identifie le flux et détecte que l'identifiant de ce flux n'est pas présent dans sa base 211. Suite à cette détection le bloc applicatif 210 détermine dans une étape 301, pour ce nouveau flux F, un ou des modes de fonctionnement opérationnels associés au nouveau flux. Le bloc applicatif 210 fournit dans une étape 302 ce(s) mode(s) de fonctionnement ({MdF}), ainsi qu'un identifiant (id-flux) du nouveau flux, à l'agent de transport 220 dans une requête comprenant en outre l'adresse du destinataire (@dest-R). En attendant la réponse à sa requête, le bloc applicatif 210 rejette les paquets reçus de ce nouveau flux ou appose un marquage provisoire prédéfini avant de les fournir au routeur 30 ou stocke les paquets reçus de ce nouveau flux.

Dans une étape 303, suite à la réception de cette requête, l'agent de transport 220 sélectionne, en fonction au moins des modes de fonctionnement du nouveau flux, de la capacité courante des moyens de télécommunication, de l'adresse du destinataire et optionnellement en fonction des informations actualisées de connectivité, et, optionnellement en fonction des informations actualisées d'état courant des files d'attente, un des moyens de télécommunication de l'ensemble 40 et un mode de fonctionnement associé au nouveau flux tel que le moyen de télécommunication sélectionné est compatible d'une télétransmission des paquets dudit flux conformément au mode de fonctionnement sélectionné du flux. L'agent de transport 220 renseigne la base de données 221 avec l'identifiant du nouveau flux, les modes de fonctionnement associés et l'indication de celui actuellement sélectionné, ainsi que l'identifiant du moyen de télécommunication actuellement sélectionné, puis définit des règles de marquage des paquets du nouveau flux et les stocke dans la base 221 en association avec l'identifiant du nouveau flux. Dans une étape 304, l'agent de transport 220 transmet une commande au routeur 30 commandant de délivrer dorénavant au moyen de télécommunication sélectionné pour le nouveau flux tous les paquets portant un marquage conforme aux règles de marquage définies pour le nouveau flux et dans une étape 305, l'agent de transport 220 répond à la requête du bloc applicatif 210 relative au nouveau flux en lui indiquant l'identifiant du flux, les règles de marquage (Mar) définies pour le nouveau flux, et le mode de fonctionnement sélectionné (MdF₀).

Le bloc applicatif 210 lorsqu'il reçoit la réponse à sa requête relative au nouveau flux, complète, dans une étape 306, sa base de données 211 avec les règles de marquage indiquées dans la réponse pour l'identifiant du flux et le mode de fonctionnement sélectionné et marque dorénavant tout paquet du nouveau flux conformément aux règles de marquage commandées par l'agent de transport et stockées dans la base 211. Notamment, s'il avait stocké les paquets reçus de ce nouveau flux, dans une étape 307, le bloc applicatif 210 transmet ces paquets une fois marqués au routeur 30. Le bloc applicatif 210 programme également la fonction de policing à appliquer au nouveau flux en cohérence avec le mode de fonctionnement sélectionné (MdF₀).

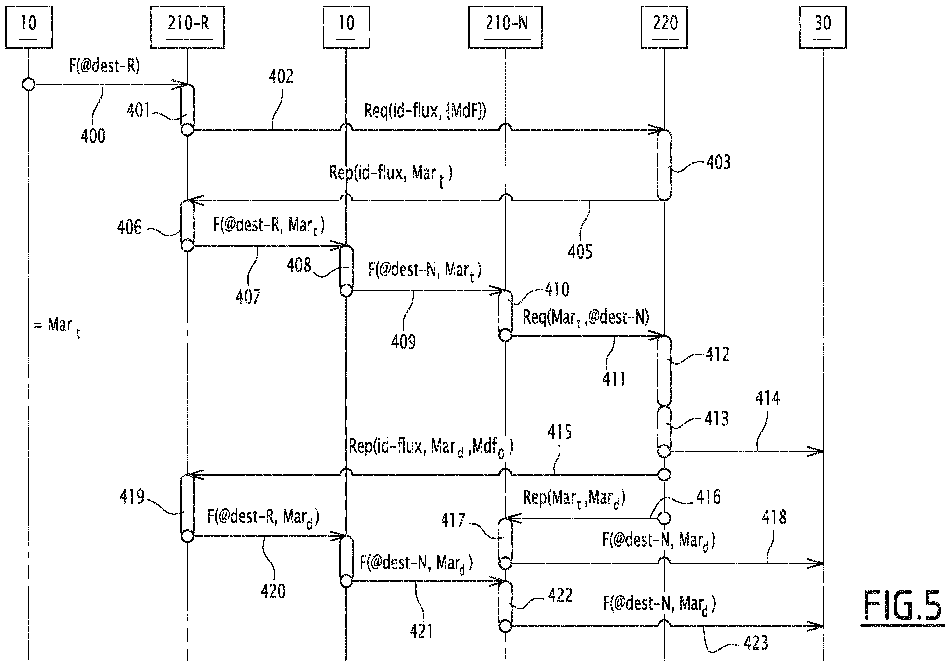

Des étapes mises en oeuvre lors de l'étape 102 par une plateforme dans un deuxième mode de réalisation telle que représentée en figure 2, avec chiffreur 50, sont représentées en figure 5 et décrites ci-dessous.

Après une étape 400 de transmission par l'ensemble d'application(s) 10 au bloc applicatif 210 d'un nouveau flux F adressé au destinataire dest-R, d'adresse @dest-R, la partie rouge 210-R du bloc applicatif 210 identifie le flux, détecte ainsi que l'identifiant de ce flux n'est pas présent dans sa base 211 et suite à cette détection, la partie rouge 210-R du bloc applicatif 210 détermine dans une étape 401, pour ce nouveau flux F, un ou des modes de fonctionnement opérationnels associés au nouveau flux. La partie rouge 210-R du bloc applicatif 210 fournit, dans une étape 402, ce(s) mode(s) de fonctionnement ({MdF}), ainsi qu'un identifiant (id-flux) du nouveau flux, à l'agent de transport 220 dans une requête (l'adresse du destinataire @dest-R n'est pas fournie). En attendant la réponse à sa requête, la partie rouge 210-R du bloc applicatif 210 rejette les paquets reçus de ce nouveau flux ou appose un marquage provisoire prédéfini avant de les fournir au chiffreur 50 ou stocke les paquets reçus de ce nouveau flux.

Dans une étape 403, l'agent de transport 220 reçoit cette requête, définit des règles de marquage temporaires des paquets du nouveau flux et les stocke dans la base 221 en association avec la requête reçue. Dans une étape 405, l'agent de transport 220 répond à la requête de la partie rouge 210-R du bloc applicatif 210 relative au nouveau flux en lui indiquant, dans une réponse, l'identifiant du flux et les règles de marquage temporaire (Marₜ) définies pour le nouveau flux.

Dans une étape 406, la partie rouge 210-R du bloc applicatif 210 marque les paquets reçus du nouveau flux d'identifiant id-flux à l'aide des règles de marquage temporaire et, dans une étape 407, transmet le flux de paquets ainsi marqués comportant en outre l'adresse @dest-R du destinataire au chiffreur 50.

Dans une étape 408, le chiffreur 50 chiffre ces paquets, détermine, en fonction de l'adresse @dest-R du destinataire, l'adresse @dest-N du chiffreur destinataire et transmet alors à la partie noire 210-N du bloc applicatif 210, dans une étape 409, les paquets chiffrés marqués par leur marquage provisoire (non chiffré), et l'adresse @dest-N.

La partie noire 210-N du bloc applicatif 210, dans une étape 410, identifie le flux, détecte ainsi que l'identifiant de ce flux n'est pas présent dans sa liste des flux actifs et suite à cette détection, adresse à l'agent de transport 220, dans une étape 411, une requête qui indique le marquage temporaire et l'adresse @dest-N du chiffreur destinataire pour ce flux. En attendant la réponse à sa requête, la partie noire 210-N du bloc applicatif 210 rejette les paquets reçus de ce nouveau flux ou appose un marquage provisoire prédéfini avant de les fournir au routeur 30 ou stocke les paquets reçus de ce nouveau flux.

Dans une étape 412, suite à la réception de cette requête, l'agent de transport 220 extrait de sa base 221, sur la base du marquage temporaire (qui sert ici de clé) indiqué dans cette dernière requête reçue, la requête provenant de la partie rouge 210-R du bloc applicatif 210 et qui a été stockée à l'étape 403 en association avec ce marquage temporaire et qui indique les modes de fonctionnement du nouveau flux.

Dans une étape 413, l'agent de transport 220 sélectionne, en fonction au moins de ces modes de fonctionnement du nouveau flux, de la capacité courante des moyens de télécommunication, de l'adresse du chiffreur destinataire et optionnellement en fonction des informations actualisées de connectivité, et, optionnellement en fonction des informations actualisées d'état courant des files d'attente, un des moyens de télécommunication de l'ensemble 40 et un mode de fonctionnement associé au nouveau flux tel que le moyen de télécommunication sélectionné est compatible d'une télétransmission des paquets dudit flux conformément au mode de fonctionnement sélectionné du flux. L'agent de transport 220 renseigne la base de données 221 avec l'indication du mode de fonctionnement actuellement sélectionné, ainsi que l'identifiant du moyen de télécommunication actuellement sélectionné, puis définit des règles de marquage actualisées des paquets du nouveau flux et les stocke dans la base 221 en association avec les informations relatives à ce nouveau flux.

Dans une étape 414, l'agent de transport 220 transmet une commande au routeur 30 commandant de délivrer dorénavant au moyen de télécommunication sélectionné pour le nouveau flux tous les paquets portant un marquage conforme aux règles de marquage actualisées définies pour le nouveau flux.

Dans une étape 415, l'agent de transport 220 répond à nouveau à la requête de la partie rouge 210-R du bloc applicatif 210 relative au nouveau flux par une réponse indiquant l'identifiant du flux (id-flux), les règles de marquage actualisées (Mar_{d}) définies pour le nouveau flux, et le mode de fonctionnement sélectionné (MdF₀). Suite à la réception de cette réponse, la partie rouge 210-R du bloc applicatif 210 marque les prochains paquets reçus du nouveau flux, dans une étape 419, avec le marquage actualisé Mar_{d}. Ces paquets ainsi marqués, associés à l'adresse du destinataire @dest-R sont envoyés au chiffreur 50 dans une étape 420, par la partie rouge 210-R du bloc applicatif 210 qui programme également la fonction de policing à appliquer au nouveau flux en cohérence avec le mode de fonctionnement sélectionné (MdF₀).

Dans une étape 421, le chiffreur 50 chiffre ces paquets, détermine, en fonction de l'adresse @dest-R du destinataire, l'adresse @dest-N du chiffreur destinataire et transmet alors à la partie noire 210-N du bloc applicatif 210, les paquets chiffrés marqués par leur marquage actualisé (non chiffré), et l'adresse @dest-N.

Dans une étape 416, qui par exemple a lieu en même temps que l'étape 415, l'agent de transport 220 répond à la requête de la partie noire 210-N du bloc applicatif 210 relative au nouveau flux par une réponse indiquant les règles de marquage temporaires (Marₜ) et les règles de marquage actualisées (Mar_{d}). Ces règles de marquage actualisées du flux sont ajoutées dans la liste des flux actifs maintenues par la partie noire 210-N et y identifient le nouveau flux.

Dans une étape 417, la partie noire 210-N du bloc applicatif 210 marque à l'aide des règles de marquage actualisées (Mar_{d}) les paquets précédemment envoyés par la partie rouge 210-R marqués par les règles de marquage temporaires (Marₜ) et qui auraient pu être stockés suite à l'étape 410, et les envoie, dans une étape 418, au routeur 30.

Par ailleurs, la partie noire 210-N du bloc applicatif 210, dans une étape 422, identifie le flux des paquets chiffrés marqués par leur marquage actualisé (non chiffré) et reçus suite à l'étape 421 comme présents dans sa liste de flux actifs, et les transmet alors une étape 423 au routeur 30.

Dans l'étape 103, étape ponctuelle qui a lieu suite à la détermination par l'agent de transport 220 qu'une variation détectée à l'étape 101 implique qu'un mode de fonctionnement sélectionné pour un flux actif ne peut plus être respecté lors d'un transport via le moyen de télécommunication sélectionné pour ce flux actif :
- l'agent de transport 220 effectue une nouvelle opération d'évaluation et de sélection d'un mode de fonctionnement de chaque flux actif et d'un moyen de télécommunication pour le flux actif, tel qu'un moyen de télécommunication sélectionné pour un flux est compatible du mode de fonctionnement sélectionné pour ce flux ; il met à jour sa base 220 en fonction des résultats de cette nouvelle opération d'évaluation et de sélection ;
- si le résultat de cette nouvelle opération d'évaluation et de sélection doit s'accompagner, pour pouvoir diriger des paquets vers les moyens sélectionnés ou pour rejeter des paquets de flux pour lesquels il n'a pas pu être sélectionné un mode de fonctionnement et un moyen de télécommunication, de nouveaux marquages et/ou d'une reprogrammation du routeur, les instructions correspondantes sont fournies par l'agent de transport 220 au bloc applicatif 210 et/ou au routeur 30 ;
- dans ce cas, le bloc applicatif 220 prend en compte ces nouvelles instructions de marquage et le routeur 30 prend en compte ces nouvelles instructions de routage.

Outre les opérations explicitement décrites en référence aux figures 3, 4 et 5, le procédé selon l'invention comprend, dans des modes de réalisation, toute opération décrite en référence à la figure 1 ou à la figure 2 et menée par l'ensemble 10 d'application(s), le bloc 210 applicatif, l'agent de transport 220, le bloc de surveillance 230, le routeur 30 ou l'ensemble 40 de moyens de télécommunication.

L'invention permet ainsi de pouvoir basculer sur un moyen de télécommunication alternatif de l'ensemble 40 de moyens de télécommunication par exemple si la capacité du moyen de télécommunication utilisé alors se réduit jusqu'à rendre inacceptable l'exploitation du flux par les utilisateurs telle que fixée dans le mode de fonctionnement alors sélectionné, et ce sans attendre la réception des notifications IP indiquant l'indisponibilité du moyen de télécommunication empêchant toute transmission, telles que « rupture lien », « perte voisin ».

L'invention permet de réagir dès qu'une contrainte opérationnelle indiquée dans un mode de fonctionnement sélectionné d'un flux n'est plus respectée, par exemple dès qu'un seuil de latence, débit ou gigue fixé par ce mode de fonctionnement est franchi, ou qu'un niveau de protection, de fiabilité, de coût de transmission ou encore une durée de vie tel que fixé dans le mode de fonctionnement sélectionné n'est plus assuré.

Dans l'exemple considéré, dès que le moyen de télécommunication sélectionné qui transporte alors la vidéo d'une phase d'atterrissage risque de donner lieu à une pixellisation ou à un ralenti, un autre moyen de télécommunication s'il existe est sélectionné pour transporter la suite de cette vidéo, ou un mode de fonctionnement dégradé mais toujours opérationnellement acceptable est choisi dans la liste des modes de fonctionnement définis pour le flux vidéo.

Selon l'invention, le moyen de télécommunication que le système 20 décide de ne plus utiliser pour la transmission d'un flux donné peut très bien être affecté de suite par le système pour la transmission d'un autre flux.

L'invention permet également de pouvoir acheminer des flux de même nature et à destination du même sous-réseau sur des moyens de télécommunication distincts, en fonctions de leurs caractéristiques opérationnelles : dans l'exemple ci-dessus, la vidéo délivrée par la première caméra pour une phase d'atterrissage/décollage peut emprunter un moyen de télécommunication différent du moyen de télécommunication emprunté par une vidéo transmise en même temps et délivrée par la deuxième caméra.

L'invention permet de transmettre le flux en garantissant tout au long de la transmission le respect d'un des modes de fonctionnement qui lui est associé.

Dans un autre mode de réalisation, les bases 211 et 221 sont regroupées dans une même base de données.

Dans un mode de réalisation, les agents de transport de différentes plateformes sont adaptés pour échanger entre eux des informations conformément à un protocole de signalisation, ces informations échangées leur permettant d'assurer une optimisation de bout en bout de l'acheminement des flux. Les informations fournies par chaque agent de transport comprennent par exemple l'indication d'ajout ou de retrait de flux actifs sur la plateforme, les modes de fonctionnement retenus pour les flux, les préemptions de flux etc.

Ci-dessus, les opérations et étapes qui ne sont pas indiquées comme propres au premier ou propres au deuxième mode de réalisation sont mises en oeuvre dans ces deux modes de réalisation.

## Revendications

1. Système de traitement (20) pour une plateforme (1) de télécommunication comprenant un ensemble (10) d'applications délivrant des flux de paquets de données, un ensemble (40) de ressources de télécommunication (40₁, 40₂, 40₃) distinctes adaptées chacune pour télétransmettre des paquets depuis la plateforme, un routeur (30) adapté pour recevoir des paquets en provenance de l'ensemble d'application(s) et pour délivrer des paquets reçus auxdites ressources de télécommunication pour télétransmission du paquet depuis la plateforme ;
ledit système de traitement étant **caractérisé en ce qu'**il est adapté pour collecter des mesures des capacités courantes de transmission des ressources de télécommunication (40₁, 40₂, 40₃) ;
le système de traitement comportant une table (211) et étant adapté pour déterminer, pour un flux de paquets délivré par une application de l'ensemble d'application(s), au moins un premier mode de fonctionnement et un deuxième mode de fonctionnement définissant chacun notamment des caractéristiques opérationnelles obligatoires de transmission, lesdits modes étant enregistrés dans une table en association avec un identifiant dudit flux ;
le système de traitement étant adapté pour évaluer en fonction au moins des premier et deuxième modes de fonctionnement et des mesures collectées des capacités courantes de transmission des ressources de télécommunication (40₁, 40₂, 40₃), celle(s) des ressources adaptées pour télétransmettre les paquets dudit flux conformément à l'un des premier et deuxième modes de fonctionnement, pour sélectionner en fonction d'au moins ladite évaluation pour ledit flux délivré par l'application, dans une première opération de sélection, un mode de fonctionnement parmi les premier et deuxième modes de fonctionnement et une ressource de télécommunication parmi lesdites ressources et pour commander le routeur (30) pour délivrer les paquets dudit flux à la ressource sélectionnée pour ledit flux de ladite application ;
le système de traitement étant adapté pour détecter ultérieurement, au cours de la télétransmission de paquets dudit flux de l'application par ladite ressource sélectionnée, en fonction de mesures collectées des capacités courantes de transmission de la ressource sélectionnée, toute variation de capacité courante de la ressource sélectionnée pour ledit flux de l'application rendant la télétransmission sur ladite ressource incompatible du mode de fonctionnement de l'application sélectionné pour ledit flux et pour lors d'une telle détection, déclencher une deuxième opération de sélection d'un mode de fonctionnement parmi les premier et deuxième modes de fonctionnement et d'une desdites ressources pour la télétransmission des paquets dudit flux restant à télétransmettre.

2. Système de traitement (20) selon la revendication 1, dans lequel le système de traitement est adapté pour, suite à ladite détection, évaluer à nouveau en fonction au moins des premier et deuxième modes de fonctionnement et des mesures collectées des capacités courantes de transmission des ressources de télécommunication (40₁, 40₂, 40₃), celle(s) des ressources adaptées pour télétransmettre les paquets dudit flux restant à télétransmettre conformément à l'un des premier et deuxième modes de fonctionnement ; le système de traitement étant adapté pour, lors de la deuxième opération de sélection, sélectionner en fonction de ladite évaluation, pour ledit flux délivré par l'application, un mode de fonctionnement parmi les premier et deuxième modes de fonctionnement et une ressource de télécommunication parmi lesdites ressources ; et pour commander le routeur (30) pour délivrer les paquets restant à transmettre du flux de l'application à la ressource sélectionnée pour ledit flux lors de la deuxième opération de sélection.

3. Système de traitement (20) selon la revendication 1 ou 2, dans lequel la ressource sélectionnée lors de la deuxième opération de sélection pour ledit flux est distincte de celle sélectionné lors de la première opération de sélection pour ledit flux et/ou le mode de fonctionnement sélectionné lors de la deuxième opération de sélection pour ledit flux est distinct de celui sélectionné lors de la première opération de sélection pour ledit flux.

4. Système de traitement (20) selon l'une des revendications précédentes, adapté pour détecter au cours de la télétransmission de paquets de plusieurs flux d'application délivrés par l'ensemble d'application(s), en fonction de mesures collectées des capacités courantes de transmission (40₁, 40₂, 40₃), toute variation de capacité courante d'une ressource sélectionnée par ledit système de traitement pour l'un des flux rendant la télétransmission sur ladite ressource incompatible d'un mode de fonctionnement sélectionné pour ledit flux et/ou pour détecter la fin de transmission d'un autre flux pour lequel un mode de fonctionnement et une ressource de télécommunication avaient été précédemment sélectionnés, pour en réponse à une telle détection, déclencher une opération de sélection globale comprenant une nouvelle opération de sélection, pour chaque flux, d'un mode de fonctionnement qui lui est associé dans la base et d'une desdites ressources, ladite ressource issue de la nouvelle sélection ayant été évaluée par ledit système de traitement, en fonction au moins des mesures collectées, comme adaptée pour télétransmettre les paquets restant à transmettre dudit flux conformément au mode de fonctionnement issu de la nouvelle sélection ;
le système de traitement étant adapté pour commander le routeur (30) pour délivrer les paquets restant à transmettre de chaque flux à la ressource issue de la nouvelle sélection pour ledit flux.

5. Système de traitement (20) selon l'une des revendications précédentes, adapté pour sélectionner une ressource et un mode de fonctionnement pour un flux en fonction en outre d'une relation d'ordre des modes de fonctionnement, et/ou d'une relation d'ordre des flux et/ou des longueurs courantes des files d'attente des paquets délivrés par le routeur en entrée des ressources respectives, et/ou de données d'identification du destinataire du flux, et/ou d'informations décrivant la connectivité d'un réseau de télécommunication interfacé aux ressources de télécommunication.

6. Système de traitement (20) selon l'une des revendications précédentes, dans lequel un mode de fonctionnement définit au moins un élément parmi un débit minimum, une plage de débits admissibles comprise entre un débit minimum et un débit maximum, une latence maximale, une plage de latences admissibles comprise entre une latence minimale et une latence maximale, une gigue maximale, un coût maximal de transmission, un niveau d'ordonnancement du mode dans une échelle d'ordonnancement des modes, un niveau de sécurité, une durée de vie des données du flux.

7. Procédé de traitement dans une plateforme (1) de télécommunication comprenant un ensemble (10) d'applications délivrant des flux de paquets de données, un ensemble (40) de ressources de télécommunication (40₁, 40₂, 40₃) distinctes adaptées chacune pour télétransmettre des paquets depuis la plateforme, un routeur (30) adapté pour recevoir des paquets en provenance de l'ensemble d'application(s) et pour délivrer des paquets reçus auxdites ressources de télécommunication pour télétransmission du paquet depuis la plateforme ; ledit procédé étant **caractérisé en ce qu'**il comprend les étapes suivantes :
- collecte de mesures des capacités courantes de transmission des ressources de télécommunication (40₁, 40₂, 40₃) ;
- détermination, pour un flux de paquets délivré par une application de l'ensemble d'application(s), d'au moins un premier mode de fonctionnement et d'un deuxième mode de fonctionnement définissant chacun notamment des caractéristiques opérationnelles obligatoires de transmission, lesdits modes étant enregistrés dans une table en association avec un identifiant dudit flux ;
- évaluation en fonction au moins des premier et deuxième modes de fonctionnement et des mesures collectées des capacités courantes de transmission des ressources de télécommunication (40₁, 40₂, 40₃), de celle(s) des ressources adaptées pour télétransmettre les paquets dudit flux conformément à l'un des premier et deuxième modes de fonctionnement ;
- sélection en fonction d'au moins ladite évaluation pour ledit flux délivré par l'application, dans une première opération de sélection, d'un mode de fonctionnement parmi les premier et deuxième modes de fonctionnement et d'une ressource de télécommunication parmi lesdites ressources et commande du routeur (30) pour qu'il délivre les paquets dudit flux à la ressource sélectionnée pour ledit flux de ladite application ;
- ultérieurement, détection, au cours de la télétransmission de paquets dudit flux de l'application par ladite ressource sélectionnée, en fonction de mesures collectées des capacités courantes de transmission de la ressource sélectionnée, de toute variation de capacité courante de la ressource sélectionnée pour ledit flux de l'application rendant la télétransmission sur ladite ressource incompatible du mode de fonctionnement de l'application sélectionné pour ledit flux et lors d'une telle détection, déclenchement d'une deuxième opération de sélection d'un mode de fonctionnement parmi les premier et deuxième modes de fonctionnement et d'une desdites ressources pour la télétransmission des paquets dudit flux restant à télétransmettre.

8. Procédé de traitement selon la revendication 7, comprenant, suite à ladite détection, des étapes de :
- évaluation, en fonction d'au moins les premier et deuxième modes de fonctionnement et des mesures collectées des capacités courantes de transmission des ressources de télécommunication (40₁, 40₂, 40₃), de celle(s) des ressources adaptées pour télétransmettre les paquets dudit flux restant à télétransmettre conformément à l'un des premier et deuxième modes de fonctionnement ;
- la deuxième opération de sélection d'un mode de fonctionnement parmi les premier et deuxième modes de fonctionnement et d'une ressource de télécommunication parmi lesdites ressources pour ledit flux délivré par l'application étant effectuée en fonction de ladite évaluation ; et
- commande du routeur (30) pour qu'il délivre les paquets restant à transmettre du flux de l'application à la ressource sélectionnée pour ledit flux lors de la deuxième opération de sélection.

9. Procédé de traitement selon la revendication 7 ou 8, selon lequel la ressource sélectionnée lors de la deuxième opération de sélection pour ledit flux est distincte de celle sélectionné lors de la première opération de sélection pour ledit flux et/ou le mode de fonctionnement sélectionné lors de la deuxième opération de sélection pour ledit flux est distinct de celui sélectionné lors de la première opération de sélection pour ledit flux.

10. Procédé de traitement selon l'une des revendications 7 à 9, comprenant les étapes de :
- détection, au cours de la télétransmission de paquets de plusieurs flux d'application délivrés par l'ensemble d'application(s), en fonction de mesures collectées des capacités courantes de transmission (40₁, 40₂, 40₃), de toute variation de capacité courante d'une ressource sélectionnée par ledit système de traitement pour l'un des flux rendant la télétransmission sur ladite ressource incompatible d'un mode de fonctionnement sélectionné pour ledit flux, et/ou détection de la fin de transmission d'un autre flux pour lequel un mode de fonctionnement et une ressource de télécommunication avaient été précédemment sélectionnés, et,
- déclenchement, en réponse à une telle détection, d'une opération de sélection globale comprenant une nouvelle opération de sélection, pour chaque flux, d'un mode de fonctionnement qui lui est associé dans la base et d'une desdites ressources, ladite ressource issue de la nouvelle sélection ayant été évaluée, en fonction au moins des mesures collectées, comme adaptée pour télétransmettre les paquets restant à transmettre dudit flux conformément au mode de fonctionnement issu de la nouvelle sélection ;
- commande du routeur (30) pour qu'il délivre les paquets restant à transmettre de chaque flux à la ressource issue de la nouvelle sélection pour ledit flux.

11. Procédé de traitement selon l'une des revendications 7 à 10, selon lequel la sélection d'une ressource et d'un mode de fonctionnement pour un flux est fonction en outre d'une relation d'ordre des modes de fonctionnement, et/ou d'une relation d'ordre des flux et/ou des longueurs courantes des files d'attente des paquets délivrés par le routeur en entrée des ressources respectives, et/ou de données d'identification du destinataire du flux, et/ou d'informations décrivant la connectivité d'un réseau de télécommunication interfacé aux ressources de télécommunication.

12. Procédé de traitement selon l'une des revendications 7 à 11, selon lequel un mode de fonctionnement définit au moins un élément parmi un débit minimum, une plage de débits admissibles comprise entre un débit minimum et un débit maximum, une latence maximale, une plage de latences admissibles comprise entre une latence minimale et une latence maximale, une gigue maximale, un coût maximal de transmission, un niveau d'ordonnancement du mode dans une échelle d'ordonnancement des modes, un niveau de sécurité, une durée de vie des données du flux.

13. Procédé de traitement selon l'une des revendications 7 à 12, comprenant une étape de télécommunication avec au moins une autre plateforme comprenant l'échange de messages indiquant les modes de fonctionnement et les ressources de télécommunication qui ont été sélectionnés pour les flux respectifs de paquets télétransmis depuis les plateformes respectives.

14. Procédé de traitement selon l'une des revendications 7 à 13, selon lequel un bloc applicatif (210) reçoit le flux de paquets délivré par l'application de l'ensemble d'application(s), détermine, pour ledit flux de paquets, au moins lesdits premier mode de fonctionnement et deuxième mode de fonctionnement et envoie une requête à un agent de transport (220) indiquant lesdits premier et deuxième modes de fonctionnement ; selon lequel l'agent de transport, sur réception d'une telle requête, effectue ladite première sélection, en fonction des premier et deuxième modes de fonctionnement indiqués dans la requête, d'un mode de fonctionnement parmi les premier et deuxième modes de fonctionnement et d'une ressource de télécommunication, définit un marquage pour les paquets dudit flux, répond à la requête du bloc applicatif, en indiquant au bloc applicatif ledit marquage défini pour les paquets dudit flux, et commande au routeur (30) de délivrer tous les paquets portant ledit marquage à ladite ressource sélectionnée pour ledit flux ; et selon lequel ledit bloc applicatif, après réception de ladite réponse, marque chaque paquet reçu dudit flux avec ledit marquage défini par l'agent de transport et délivre les paquets marqués au routeur 30.

15. Procédé de traitement selon la revendication 14 pour une plateforme (1) de télécommunication comprenant en outre un chiffreur (50),
selon lequel une partie rouge (210-R) du bloc applicatif (210) traite exclusivement les paquets de flux non chiffrés et une partie noire (210-N) du bloc applicatif (210) traite exclusivement les paquets de flux chiffrés, et selon lequel la partie rouge du bloc applicatif reçoit le flux de paquets délivré par une application de l'ensemble d'application(s), détermine, pour ledit flux de paquets, au moins lesdits premier mode de fonctionnement et deuxième mode de fonctionnement et envoie une première requête à l'agent de transport indiquant lesdits premier et deuxième modes de fonctionnement ;
selon lequel l'agent de transport, sur réception de la première requête, effectue ladite première sélection, en fonction des premier et deuxième modes de fonctionnement indiqués dans la première requête, d'un mode de fonctionnement parmi les premier et deuxième modes de fonctionnement et d'une ressource de télécommunication, définit un marquage temporaire pour les paquets dudit flux, stocke lesdits premier et deuxième modes de fonctionnement indiqués dans la première requête en correspondance avec ledit marquage temporaire et répond à la première requête de la partie rouge du bloc applicatif, en indiquant dans une première réponse à la partie rouge, ledit marquage temporaire défini pour les paquets dudit flux,
selon lequel la partie rouge du bloc applicatif, après réception de ladite réponse, marque chaque paquet reçu dudit flux avec ledit marquage temporaire défini par l'agent de transport et délivre les paquets marqués au chiffreur (50) ;
selon lequel ledit chiffreur (50) chiffre les paquets délivrés par la partie rouge du bloc applicatif, détermine l'adresse d'un déchiffreur destinataire en fonction de l'adresse du destinataire du flux et délivre à la partie noire du bloc applicatif les paquets chiffrés indiquant en clair l'adresse du déchiffreur destinataire et le marquage temporaire ;
selon lequel la partie noire (210-N) du bloc applicatif reçoit les paquets chiffrés délivrés par le chiffreur, et envoie une deuxième requête à l'agent de transport indiquant l'adresse du déchiffreur destinataire et ledit marquage temporaire ;
l'agent de transport, sur réception de la deuxième requête, extrait les premier et deuxième modes de fonctionnement stockés en correspondance avec le marquage temporaire qui est indiqué dans la deuxième requête, effectue ladite première sélection, en fonction desdits premier et deuxième modes de fonctionnement extraits et de l'adresse du déchiffreur destinataire, d'un mode de fonctionnement parmi les premier et deuxième modes de fonctionnement et d'une ressource de télécommunication, définit un marquage définitif pour les paquets dudit flux, répond à la partie rouge et à la partie noire du bloc applicatif, en leur indiquant à chacune ledit marquage définitif pour les paquets dudit flux, et command au routeur (30) de délivrer tous les paquets portant ledit marquage définitif à ladite ressource sélectionnée pour ledit flux ;
la partie rouge du bloc applicatif, après réception du marquage définitif, marque chaque paquet reçu dudit flux avec ledit marquage définitif et délivre les paquets ainsi marqués au chiffreur (50) ;
la partie noire du bloc applicatif, après réception du marquage définitif, remplace par ledit marquage définitif le marquage temporaire de chaque paquet reçu dudit flux portant ledit marquage temporaire et délivre au routeur (50) les paquets ainsi marqués ainsi que les paquets portant le marquage définitif et délivrés par le chiffreur.

## Patentansprüche

1. Verarbeitungssystem (20) für eine Telekommunikationsplattform (1) aufweisend eine Menge (10) von Anwendungen, die Datenpaketströme liefern, eine Menge (40) von unterschiedlichen Telekommunikationsressourcen (40₁, 40₂, 40₃), die jeweils zum Fernübertragen von Paketen ausgehend von der Plattform eingerichtet sind, einen Router (30), eingerichtet zum Empfangen von Paketen, die von der Menge von Anwendung(en) kommen und zum Liefern von empfangenen Paketen an die Telekommunikationsressourcen zum Fernübertragen des Pakets ausgehend von der Plattform; wobei das Verarbeitungssystem dadurch charakterisiert ist, dass es zum Sammeln von Messungen der aktuellen Übertragungskapazitäten der Telekommunikationsressourcen (40₁, 40₂, 40₃) eingerichtet ist;
wobei das Verarbeitungssystem eine Tabelle (211) aufweist und eingerichtet ist zum Bestimmen, für einen Paketstrom, der von einer Anwendung der Menge von Anwendung(en) geliefert wird, mindestens eines ersten Betriebsmodus und eines zweiten Betriebsmodus, die jeweils insbesondere obligatorische Übertragungsbetriebseigenschaften definieren, wobei die Modi in einer Tabelle in Assoziation mit einer Identifikation des Flusses gespeichert werden; wobei das Verarbeitungssystem eingerichtet ist zum Auswerten, in Abhängigkeit mindestens des ersten und zweiten Betriebsmodus und der gesammelten Messungen der aktuellen Übertragungskapazitäten der Telekommunikationsressourcen (40₁, 40₂, 40₃), derjenigen der Ressourcen, die zum Fernübertragen der Pakete des Flusses konform mit dem ersten und dem zweiten Betriebsmodus eingerichtet sind, zum Auswählen, in Abhängigkeit mindestens der Auswertung für den von der Anwendung gelieferten Fluss, in einer ersten Auswahloperation, eines Betriebsmodus aus dem ersten und zweiten Betriebsmodus und einer Telekommunikationsressource aus den Ressourcen und zum Steuern des Routers (30) zum Liefern der Pakete des Flusses an die für den Fluss der Anwendung ausgewählte Ressource;
wobei das Verarbeitungssystem eingerichtet ist, zum anschließenden Detektieren, im Laufe der Fernübertragung von Paketen des Flusses der Anwendung mittels der ausgewählten Ressource, in Abhängigkeit der gesammelten Messungen der aktuellen Übertragungskapazitäten der ausgewählten Ressource, jeglicher Variation der aktuellen Kapazität der für den Fluss der Anwendung ausgewählten Ressource, die die Fernübertragung auf der Ressource mit dem für den Fluss ausgewählten Betriebsmodus der Anwendung inkompatibel macht und zum Auslösen, bei einer solchen Detektion, einer zweiten Operation zum Auswählen eines Betriebsmodus aus dem ersten und dem zweiten Betriebsmodus und einer der Ressourcen für die Fernübertragung der Pakete des Flusses, die noch zu fernübertragen sind.

2. Verarbeitungssystem (20) gemäß Anspruch 1, in dem das Verarbeitungssystem eingerichtet ist, in Folge der Detektion, zum erneuten Auswerten, in Abhängigkeit mindestens des ersten und zweiten Betriebsmodus und der gesammelten Messungen der aktuellen Übertragungskapazitäten der Telekommunikationsressourcen (40₁, 40₂, 40₃), derjenigen der Ressourcen, die zum Fernübertragen der Pakete des Flusses, die noch zu fernübertragen sind, konform mit dem ersten und dem zweiten Betriebsmodus eingerichtet sind; wobei das Verarbeitungssystem eingerichtet ist zum Auswählen, bei der zweiten Auswahloperation, in Abhängigkeit der Auswertung, eines Betriebsmodus aus dem ersten und zweiten Betriebsmodus und einer Telekommunikationsressource aus den Ressourcen für den von der Anwendung gelieferten Fluss; und zum Steuern des Routers (30) zum Liefern der Pakete des Flusses, die noch zu fernübertragen sind, an die für den Fluss der Anwendung bei der zweiten Auswahloperation ausgewählte Ressource.

3. Verarbeitungssystem (20) gemäß Anspruch 1 oder 2, in dem die bei der zweiten Auswahloperation ausgewählte Ressource für den Fluss unterschiedlich ist von der bei der zweiten Auswahloperation für den Fluss ausgewählten Ressource ist und/oder der bei der zweiten Auswahloperation für den Fluss ausgewählte Betriebsmodus unterschiedlich ist von dem bei der ersten Auswahloperation für den Fluss ausgewähltem Betriebsmodus.

4. Verarbeitungssystem (20) gemäß einem der vorhergehenden Ansprüche, eingerichtet zum Detektieren im Laufe der Fernübertragung von Paketen von mehreren Anwendungsflüssen, die von der Menge von Awendung(en) geliefert werden, in Abhängigkeit von gesammelten Messungen der aktuellen Übertragungskapazitäten (40₁, 40₂, 40₃), jeglicher Variation der aktuellen Kapazität einer der durch das Verarbeitungssystem für einen der Flüsse ausgewählten Ressource, die die Fernübertragung auf der Ressource mit einem für den Fluss ausgewählten Betriebsmodus der Anwendung inkompatibel macht und/oder zum Detektieren des Endes der Übertragung eines anderen Flusses, für den ein Betriebsmodus und eine Telekommunikationsressource vorher ausgewählt worden sind, um in Reaktion auf eine solche Detektion eine globale Auswahloperation auszulösen, die eine neue Operation zum Auswählen für jeden Fluss eines Operationsmodus, der mit ihm in der Datenbank assoziiert ist, und einer der Ressourcen aufweist, wobei die Ressource, die aus der neuen Auswahl hervorgeht, durch das Verarbeitungssystem in Abhängigkeit mindestens der gesammelten Messungen als zum Fernübertragen der noch zu übertragenden Paketen des Flusses konform mit dem aus der neuen Auswahl hervorgehenden Betriebsmodus geeignet bewertet wurde,
wobei das Verarbeitungssystem zum Steuern (30) des Routers zum Liefern der noch zu übertragenden Pakete jedes Flusses an die aus der neuen Auswahl für den Fluss hervorgehenden Ressource.

5. Verarbeitungssystem (20) gemäß einem der vorhergehenden Ansprüche, eingerichtet zum Auswählen einer Ressource und eines Betriebsmodus für einen Fluss in Abhängigkeit außerdem einer Ordnungsrelation der Betriebsmodi und/oder einer Ordnungsrelation der Flüsse und/oder der aktuellen Längen der Warteschlangen der von dem Router gelieferten Pakete am Eingang der jeweiligen Ressourcen und/oder von Identifikationsdaten des Adressaten des Flusses und/oder von Informationen, die die Konnektivität eines Telekommunikationsnetzwerks, das mit den Telekommunikationsressourcen verbunden ist, beschreiben.

6. Verarbeitungssystem (20) gemäß einem der vorhergehenden Ansprüche, in dem ein Betriebsmodus mindestens ein Element unter einem minimalen Durchsatz, einem Bereich von zulässigen Durchsätzen, enthalten zwischen einem minimalen Durchsatz und einem maximalen Durchsatz, einer maximalen Latenz, einem Bereich von zulässigen Latenzen, enthalten zwischen einer minimalen Latenz und einer maximalen Latenz, einem maximalen Jitter, maximalen Übertragungskosten, einer Ablaufsposition des Modus in einer Ablaufsreihenfolge der Modi, eines Sicherheitsniveaus und einer Lebensdauer der Daten des Flusses definiert.

7. Verarbeitungsverfahren in einer Telekommunikationsplattform (1) aufweisend eine Menge (10) von Anwendungen, die Datenpaketströme liefern, eine Menge (40) von unterschiedlichen Telekommunikationsressourcen (40₁, 40₂, 40₃), die jeweils zum Fernübertragen von Paketen ausgehend von der Plattform eingerichtet sind, einen Router (30), eingerichtet zum Empfangen von Paketen, die von der Menge von Anwendung(en) kommen und zum Liefern von empfangenen Paketen an die Telekommunikationsressourcen zum Fernübertragen des Pakets ausgehend von der Plattform; wobei das Verfahren dadurch charakterisiert ist, dass es die folgenden Schritte aufweist:
- Sammeln von Messungen der aktuellen Übertragungskapazitäten der Telekommunikationsressourcen (40₁, 40₂, 40₃) ;
- Bestimmen, für einen Paketstrom, der von einer Anwendung der Menge von Anwendung(en) geliefert wird, mindestens eines ersten Betriebsmodus und eines zweiten Betriebsmodus, die jeweils insbesondere obligatorische Übertragungsbetriebseigenschaften definieren, wobei die Modi in einer Tabelle in Assoziation mit einer Identifikation des Flusses gespeichert werden;
- Auswerten, in Abhängigkeit mindestens des ersten und zweiten Betriebsmodus und der gesammelten Messungen der aktuellen Übertragungskapazitäten der Telekommunikationsressourcen (40₁, 40₂, 40₃), derjenigen der Ressourcen, die zum Fernübertragen der Pakete des Flusses konform mit dem ersten Betriebsmodus und dem zweiten Betriebsmodus eingerichtet sind,
- Auswählen, in Abhängigkeit mindestens der Auswertung für den von der Anwendung gelieferten Fluss, in einer ersten Auswahloperation, eines Betriebsmodus aus dem ersten und zweiten Betriebsmodus und einer Telekommunikationsressource aus den Ressourcen und Steuern des Routers (30), so dass er die Pakete des Flusses an die für den Fluss der Anwendung ausgewählte Ressource liefert;
- anschließendes Detektieren, im Laufe der Fernübertragung von Paketen des Flusses der Anwendung mittels der ausgewählten Ressource, in Abhängigkeit der gesammelten Messungen der aktuellen Übertragungskapazitäten der ausgewählten Ressource, jeglicher Variation der aktuellen Kapazität der für den Fluss der Anwendung ausgewählten Ressource, die die Fernübertragung auf der Ressource mit dem für den Fluss ausgewählten Betriebsmodus der Anwendung inkompatibel macht und zum Auslösen, bei einer solchen Detektion, einer zweiten Operation zum Auswählen eines Betriebsmodus aus dem ersten und dem zweiten Betriebsmodus und einer der Ressourcen für die Fernübertragung der Pakete des Flusses, die noch zu fernübertragen sind.

8. Verarbeitungsverfahren gemäß Anspruch 7, aufweisend, in Folge der Detektion, Schritte zum:
- Auswerten, in Abhängigkeit mindestens des ersten und zweiten Betriebsmodus und der gesammelten Messungen der aktuellen Übertragungskapazitäten der Telekommunikationsressourcen (40₁, 40₂, 40₃), derjenigen der Ressourcen, die zum Fernübertragen der Pakete des Flusses, die noch zu fernübertragen sind, konform mit dem ersten und dem zweiten Betriebsmodus eingerichtet sind;
- wobei die zweite Auswahloperation eines Betriebsmodus aus dem ersten und zweiten Betriebsmodus und einer Telekommunikationsressource aus den Ressourcen für den von der Anwendung gelieferten Fluss in Abhängigkeit der Auswertung durchgeführt wird; und
- Steuern des Routers (30), so dass er die Pakete des Flusses, die noch zu fernübertragen sind, an die für den Fluss der Anwendung bei der zweiten Auswahloperation ausgewählte Ressource liefert.

9. Verarbeitungsverfahren gemäß Anspruch 7 oder 8, in dem die bei der zweiten Auswahloperation ausgewählte Ressource für den Fluss unterschiedlich ist von der bei der zweiten Auswahloperation für den Fluss ausgewählten Ressource ist und/oder der bei der zweiten Auswahloperation für den Fluss ausgewählte Betriebsmodus unterschiedlich ist von dem bei der ersten Auswahloperation für den Fluss ausgewähltem Betriebsmodus.

10. Verarbeitungsverfahren gemäß einem der Ansprüche 7 bis 9, aufweisend die Schritte zum:
- Detektieren im Laufe der Fernübertragung von Paketen von mehreren Anwendungsflüssen, die von der Menge von Awendung(en) geliefert werden, in Abhängigkeit von gesammelten Messungen der aktuellen Übertragungskapazitäten (40₁, 40₂, 40₃), jeglicher Variation der aktuellen Kapazität einer der durch das Verarbeitungssystem für einen der Flüsse ausgewählten Ressource, die die Fernübertragung auf der Ressource mit einem für den Fluss ausgewählten Betriebsmodus der Anwendung inkompatibel macht und/oder zum Detektieren des Endes der Übertragung eines anderen Flusses, für den ein Betriebsmodus und eine Telekommunikationsressource vorher ausgewählt worden sind, und
- Auslösen, in Reaktion auf eine solche Detektion, einer globalen Auswahloperation, die eine neue Operation zum Auswählen für jeden Fluss eines Operationsmodus, der mit ihm in der Datenbank assoziiert ist, und einer der Ressourcen aufweist, wobei die Ressource, die aus der neuen Auswahl hervorgeht, in Abhängigkeit mindestens der gesammelten Messungen als zum Fernübertragen der noch zu übertragenden Paketen des Flusses konform mit dem aus der neuen Auswahl hervorgehenden Betriebsmodus geeignet bewertet wurde,
- Steuern (30) des Routers zum Liefern der noch zu übertragenden Pakete jedes Flusses an die aus der neuen Auswahl für den Fluss hervorgehenden Ressource.

11. Verarbeitungsverfahren gemäß einem der Ansprüche 7 bis 10, gemäß dem das Auswählen einer Ressource und eines Betriebsmodus für einen Fluss von außerdem einer Ordnungsrelation der Betriebsmodi und/oder einer Ordnungsrelation der Flüsse und/oder der aktuellen Längen der Warteschlangen der von dem Router gelieferten Pakete am Eingang der jeweiligen Ressourcen und/oder von Identifikationsdaten des Adressaten des Flusses und/oder von Informationen, die die Konnektivität eines Telekommunikationsnetzwerks, das mit den Telekommunikationsressourcen verbunden ist, beschreiben, abhängt.

12. Verarbeitungsverfahren gemäß einem der Ansprüche 7 bis 11, in dem ein Betriebsmodus mindestens ein Element unter einem minimalen Durchsatz, einem Bereich von zulässigen Durchsätzen, enthalten zwischen einem minimalen Durchsatz und einem maximalen Durchsatz, einer maximalen Latenz, einem Bereich von zulässigen Latenzen, enthalten zwischen einer minimalen Latenz und einer maximalen Latenz, einem maximalen Jitter, maximalen Übertragungskosten, einer Ablaufsposition des Modus in einer Ablaufsreihenfolge der Modi, eines Sicherheitsniveaus und einer Lebensdauer der Daten des Flusses definiert.

13. Verarbeitungsverfahren gemäß einem der Ansprüche 7 bis 12, aufweisend einen Schritt der Telekommunikation mit mindestens einer anderen Plattform, aufweisend den Austausch von Nachrichten, die die Betriebsmodi und die Telekommunikationsressourcen, die für die ausgehend von den jeweiligen Plattformen fernübertragenen jeweiligen Flüsse von Paketen ausgewählt wurden, anzeigen.

14. Verarbeitungsverfahren gemäß einem der Ansprüche 7 bis 13, gemäß dem ein Anwendungsblock (210) den von der Anwendung der Menge von Anwendung(en) gelieferten Fluss empfängt, für den Fluss von Paketen mindestens den ersten Betriebsmodus und den zweiten Betriebsmodus ermittelt und eine Anfrage an einen Transportagenten (220) schickt, die den ersten und zweiten Betriebsmodus angibt; gemäß dem der Transportagent bei Empfang einer solchen Anfrage die erste Auswahl in Abhängigkeit des in der Anfrage angegebenen ersten und zweiten Betriebsmodus eines Betriebsmodus aus dem ersten Betriebsmodus und dem zweiten Betriebsmodus und einer Telekommunikationsressource durchführt, eine Markierung für die Pakete des Flusses definiert, auf die Anfrage des Anwendungsblocks antwortet, wobei er dem Anwendungsblock die für die Pakete des Flusses definierte Markierung angibt, und den Router (30) anweist, alle diejenigen Pakete, die die Markierung tragen, an die für den Fluss ausgewählte Ressource zu liefern; und gemäß dem der Anwendungsblock nach Empfang der Antwort jedes empfangene Paket des Flusses mit der von der von dem Transportagent definierten Markierung markiert und die markierten Pakete an den Router (30) liefert.

15. Verarbeitungsverfahren gemäß Anspruch 14 für eine Telekommunikationsplattform (1) außerdem aufweisend einen Verschlüsseler (50),
gemäß dem ein roter Teil (210-R) des Anwendungsblocks (210) exklusiv die unverschlüsselten Flusspakete verarbeitet und ein schwarzer Teil (210-N) des Anwendungsblocks (210) exklusiv die verschlüsselten Flusspakete verarbeitet und gemäß dem der rote Teil des Anwendungsblocks den von einer Anwendung der Menge von Anwendung(en) gelieferten Fluss von Paketen empfängt, für den Fluss von Paketen mindestens den ersten Betriebsmodus und den zweiten Betriebsmodus ermittelt und eine erste Anfrage an den Transportagent schickt, die den ersten und den zweiten Betriebsmodus angibt;
gemäß dem der Transportagent bei Empfang der ersten Anfrage in Abhängigkeit des in der ersten Anfrage angegebenen ersten und zweiten Betriebsmodus die erste Auswahl eines Betriebsmodus aus dem ersten und dem zweiten Betriebsmodus und einer Telekommunikationsressource durchführt, eine temporäre Markierung für die Pakete des Flusses definiert, den in der ersten Anfrage angegebenen ersten und zweiten Betriebsmodus in Korrespondenz mit der temporären Markierung speichert und auf die erste Anfrage des roten Teils des Anwendungsblocks unter Angabe der für die Pakete des Flusses definierten temporären Markierung in einer ersten Antwort an den roten Teil antwortet,
gemäß dem der rote Teil des Anwendungsblocks nach Empfang der Antwort jedes empfangene Paket des Flusses mit der von dem Transportagent definierten temporären Markierung markiert und die markierten Pakete an den Verschlüsseler (50) liefert;
gemäß dem der Verschlüsseler (50) die von dem roten Teil des Anwendungsblocks gelieferten Pakete verschlüsselt, die Adresse eines Ziel-Entschlüsselers in Abhängigkeit von der Adresse des Adressaten des Flusses ermittelt und die verschlüsselten Pakete an den schwarzen Teil des Anwendungsblocks unter Angabe in Klartext der Adresse des Ziel-Entschlüsselers und der temporären Markierung liefert; gemäß dem der schwarze Teil (210-N) des Anwendungsblocks die von dem Verschlüsseler gelieferten Pakete empfängt und eine zweite Anfrage an den Transportagent schickt, die die Adresse des Ziel-Entschlüsselers und die temporäre Markierung angibt;
der Transportagent bei Empfang der zweiten Anfrage den ersten und zweiten in Korrespondenz mit der temporären Markierung, die in der zweiten Anfrage angegeben ist, gespeicherten Betriebsmodus extrahiert, die erste Auswahl eines Betriebsmodus aus dem ersten und zweiten Betriebsmodus und einer Telekommunikationsressource in Abhängigkeit des ersten und zweiten extrahierten Betriebsmodus und der Adresse des Ziel-Entschlüsselers durchführt, eine endgültige Markierung für die Pakete des Flusses definiert, an den roten Teil und an den schwarzen Teil des Anwendungsblocks antwortet, wobei er jedem von ihnen die endgültige Markierung für die Pakete des Flusses angibt, und den Router (30) anweist, alle die Pakete, die die endgültige Markierung tragen, an die für den Fluss ausgewählte Ressource zu liefern;
der rote Teil des Anwendungsblocks nach Empfang der endgültigen Markierung jedes empfangene Paket des Flusses mit der endgültigen Markierung markiert und die so markierten Pakete an den Verschlüsseler (50) liefert;
der schwarze Teil des Anwendungsblocks nach Empfang der endgültigen Markierung die temporäre Markierung jedes empfangenen Pakets des Flusses, das diese temporäre Markierung trägt, durch die endgültige Markierung ersetzt und die so markierten Pakete ebenso wie die Pakete, die die endgültige Markierung tragen und von dem Verschlüsseler geliefert werden, an den Router (50) liefert.

## Claims

1. A processing system (20) for a telecommunication platform (1) comprising a set (10) of applications delivering data packet flows, a set (40) of distinct telecommunication resources (40₁, 40₂, 40₃) each adapted for remotely transmitting packets from the platform, a router (30) adapted for receiving packets from the set of application(s) and for delivering received packets to said telecommunication resources for remote transmission of the packet from the platform;
said processing system being **characterized in that** it is adapted for collecting measurements of current transmission capacities of the telecommunication resources (40₁, 40₂, 40₃);
the processing system including a table (211) and being adapted for determining, for a flow of packets delivered by an application from the set of application(s), at least one first operating mode and a second operating mode each notably defining mandatory operational transmission characteristics, said modes being recorded in a table associated with an identifier of said flow;
the processing system being adapted for evaluating, depending at least on the first and second operating modes and on measurements collected of the current transmission capacities of the telecommunication resources (40₁, 40₂, 40₃), that (those) of the adapted resources for remotely transmitting the packets of said flow according to one of the first and second operating modes, for selecting depending on at least said evaluation for said flow delivered by the application, in a first selection operation, an operating mode from among the first and second operating modes and a telecommunication resource from among said resources and for ordering the router (30) to deliver the packets of said flow to the selected resource for said flow of said application;
the processing system being adapted for subsequently detecting, during the remote transmission of packets of said flow of the application through said selected resource, depending on collected measurements of the current transmission capacities of the selected resource, any variation in the current capacity of the selected resource for said flow of the application making remote transmission on said resource incompatible with the operating mode of the selected application for said flow and for, during such a detection, triggering a second operation for selecting an operating mode from among the first and second operating modes and one of said resources for remote transmission of the packets of said remaining flow to be remotely transmitted.

2. The processing system (20) according to claim 1, wherein the processing system is adapted for, subsequently to said detection, again evaluating depending on at least first and second operating modes and on collected measurements of the current transmission capacities of the telecommunication resources (40₁, 40₂, 40₃), that(those) of the resources adapted for remotely transmitting the packets of said remaining flow to be remotely transmitted according to one of the first and second operating modes; the processing system being adapted for, during the second selection operation, selecting depending on said evaluation, for said flow delivered by the application, an operating mode from among the first and second operating modes and a telecommunication resource from among said resources; and for ordering the router (30) to deliver the packets which remain to be transmitted of the flow of the application to the selected resource for said flow during the second selection operation.

3. The processing system (20) according to claim 1 or 2, wherein the selected resource during the second selection operation for said flow is distinct from the one selected during the first selection operation for said flow and/or the selected operating mode during the second selection operation for said flow is distinct from the one selected during the first selection operation for said flow.

4. The processing system (20) according to one of the preceding claims, adapted for detecting, during remote transmission of packets of several application flows delivered by the set of application(s), depending on collected measurements of the current transmission capacities (40₁, 40₂, 40₃), any variation in the current capacity of a selected resource by said processing system for one of the flows making remote transmission on said resource incompatible with a selected operating mode for said flow and/or for detecting the end of transmission of another flow for which an operating mode and a telecommunication resource had been selected earlier, in order to, in response to such detection, triggering a global selection operation comprising a new selection operation, for each flow, of an operating mode which is associated with it in the base and of said resources, said resource from the new selection having been evaluated by said processing system, depending on at least collected measurements, as adapted for remotely transmitting the packets which remain to be transmitted of said flow according to the operating mode from the new selection;
the processing system being adapted for ordering the router (30) to deliver the remaining packets to be transmitted of each flow to the resource from the new selection for said flow.

5. The processing system (20) according to one of the preceding claims, adapted for selecting a resource and an operating mode for a flow further depending on an order relationship of the operating modes, and/or on an order relationship of the flows and/or of current lengths of queues of the packets delivered by the router at the input of the respective resources, and/or identification data of the addressee of the flow, and/or information describing the connectivity of a telecommunication network interfaced with the telecommunication resources.

6. The processing system (20) according to one of the preceding claims, wherein an operating mode defines at least one element from among a minimum throughput, a range of admissible throughputs comprised between a minimum throughput and a maximum throughput, a maximum latency, a range of admissible latencies comprised between a minimum latency and a maximum latency, a maximum jig, a maximum transmission cost, an ordering level of the mode in an ordering scale of the modes, a security level, a lifetime of the data of the flow.

7. A processing method in a telecommunication platform (1) comprising a set (10) of applications delivering data packet flows, a set (40) of distinct telecommunication resources (40₁, 40₂, 40₃) each adapted for remotely transmitting packets from the platform, a router (30) adapted for receiving packets from the set of application(s) and for delivering received packets to said telecommunication resources for remotely transmitting the packet from the platform; said method being **characterized in that** it comprises the following steps:
- collecting measurements of the current transmission capacities of the telecommunication resources (40₁, 40₂, 40₃);
- determining, for a flow of packets delivered by an application from the set of application(s), at least one first operating mode and a second operating mode each defining notably mandatory operational transmission characteristics, said modes being recorded in a table associated with an identifier of said flow;
- evaluating depending on at least the first and second operating modes and on collected measurements of the current transmission capacities of the telecommunication resources (40₁, 40₂, 40₃), of that(those) of the resources adapted for remotely transmitting the packets of said flow according to one of the first and second operating modes;
- selecting depending on at least said evaluation for said flow delivered by the application, in a first selection operation, an operating mode from among the first and second operating modes and a telecommunication resource from among said resources and ordering the router (30) so that it delivers the packets of said flow to the selected resource for said flow of said application;
- subsequently, detecting, during the remote transmission of packets of said flow of the application by said selected resource, depending on collected measurements of the current transmission capacities of the selected resource, any variation in the current capacity of the selected resource for said flow of the application making the remote transmission on said resource incompatible with the operating mode of the application, selected for said flow and during such a detection, triggering a second operation for selecting an operating mode from among the first and second operating modes and one of said resources for remote transmission of the packets of said remaining flow to be remotely transmitted.

8. The processing method according to claim 7, comprising, subsequently to said detection, steps for:
- evaluating, depending on at least the first and second operating modes and on the collected measurements of the current transmission capacities of the telecommunication resources (40₁, 40₂, 40₃), on that(those) of the resources adapted for remotely transmitting the packets of said remaining flow to be remotely transmitted, according to one of the first and second operating modes;
- the second operation for selecting an operating mode from among the first and second operating modes and a telecommunication resource from among said resources for said flow delivered by the application being carried out depending on said evaluation; and
- ordering the router (30) so that it delivers the remaining packets to be transmitted of the flow of the application to the selected resource for said flow during the second selection operation.

9. The processing method according to claim 7 or 8, according to which the selected resource during the second selection operation for said flow is distinct from the one selected during the first selection operation for said flow and/or the selected operating mode during the second selection operation for said flow is distinct from the one selected during the first selection operation for said flow.

10. The processing method according to one of claims 7 to 9, comprising the steps for:
- detecting, during remote transmission of packets from several application flows delivered by the set of application(s), depending on collected measurements of the current transmission capacities (40₁, 40₂, 40₃), on any current variation of capacity of a selected resource by said processing system for one of the flows making the remote transmission on said resource incompatible with a selected operating mode for said flow, and/or detecting the end of transmission of another flow for which an operating mode and a telecommunication resource have been selected previously, and,
- triggering, in response to such a detection, a global selection operation comprising a new selection operation, for each flow, of an operating mode which is associated with it in the base and of one of said resources, said resource from the new selection having been evaluated, depending on at least the collected measurements, as adapted for remotely transmitting the remaining packets to be transmitted of the flow according to the operating mode from the new selection;
- ordering the router (30) so that it delivers the remaining packets to be transmitted of each flow to the resource from the new selection for said flow.

11. The processing method according to one of claims 7 to 10, according to which the selection of a resource and of an operating mode for a flow further depends on an order relationship of the operating modes, and/or on an order relationship of the flows and/or of the current lengths of the queues of the packets delivered by the router at the input of the respective resources, and/or of data for identifying the addressee of the flow, and/or information describing the connectivity of a telecommunication network interfaced to the telecommunication resources.

12. The processing method according to one of claims 7 to 11, according to which an operating mode defines at least one element from among a minimum throughput, a range of admissible throughputs comprised between a minimum throughput and a maximum throughput, a maximum latency, a range of admissible latencies comprised between a minimum latency and a maximum latency, a maximum jig, a maximum transmission cost, an ordering level of the mode in a mode ordering scale, a security level, a lifetime of the data of the flow.

13. The processing method according to one of claims 7 to 12, comprising a telecommunication step with at least one other platform comprising the exchange of messages indicating the operating modes and the telecommunication resources which have been selected for the respective flows of packets remotely transmitted from the respective platforms.

14. The processing method according to one of claims 7 to 13, according to which an application block (210) receives the flow of packets delivered by the application from the set of application(s), determines, for said flow of packets, at least said first operating mode and second operating mode and sends a request to a transport agent (220) indicating said first and second operating modes; according to which the transport agent, upon receiving such a request, carries out said first selection, depending on the first and second operating modes indicated in the request, of an operating mode from among the first and second operating modes and of a telecommunication resource, defines a marking for the packets of said flow, answers the request from the application block, by indicating to the application block said marking defined for the packets of said flow, and orders the router (30) to deliver all the packets bearing said marking to said selected resource for said flow; and according to which said application block, after receiving said answer, marks each received packet of said flow with said marking defined by the transport agent and delivers the marked packets to the router 30.

15. The processing method according to claim 14 for a telecommunication platform (1) further comprising an encryptor (50),
according to which a red portion (210-R) of the application block (210) exclusively processes the non-encrypted flow packets and a black portion (210-N) of the application block (210) exclusively processes the encrypted flow packets, and according to which the red portion of the application block receives the flow of packets delivered by an application from the set of application(s), determines, for each flow of packets, at least said first operating mode and second operating mode and sends a first request to the transport agent indicating said first and second operating modes;
according to which the transport agent, upon receiving the first request, carries out said first selection, depending on the first and second operating modes indicated in the first request, of an operating mode from among the first and second operating modes and a telecommunication resource, defines a temporary marking for the packets of said flow, stores said first and second operating modes indicated in the first request matching said temporary marking and answers the first request of the red portion of the application block, by indicating in a first answer to the red portion, said temporary marking defined for the packets of said flow,
according to which the red portion of the application block, after receiving said answer, marks each received packet of said flow with said temporary marking defined by the transport agent and delivers the marked packets to the encryptor (50);
according to which said encryptor (50) encrypts the packets delivered by the red portion of the application block, determines the address of an encryptor addressee depending on the address of the addressee of the flow and delivers to the black portion of the application block the encrypted packets indicating in clear text the address of the encryptor addressee and the temporary marking;
according to which the black portion (210-N) of the application block receives the encrypted packets delivered by the encryptor, and sends a second request to the transport agent indicating the address of the encryptor addressee and said temporary marking;
the transport agent, upon receiving the second request, extracts the first and second operating modes stored and matched with the temporary marking which is indicated in the second request, carries out said first selection, depending on said extracted first and second operating modes and on the address of the encryptor addressee, of an operating mode from among the first and second operating modes and a telecommunication resource, defines a definitive marking for the packets of said flow, answers the red portion and the black portion of the application block, by indicating to each of them said definitive marking for the packets of said flow, and orders the router (30) to deliver all the packets bearing said definitive marking to said selected resource for said flow;
the red portion of the application block, after receiving the definitive marking, marks each received packet of said flow with said definitive marking and delivers the thereby marked packets to the encryptor (50);
the black portion of the application block, after receiving the definitive marking, replaces with said definitive marking the temporary marking of each received packet of said flow bearing said temporary marking and delivers to the router (50) the thereby marked packets as well as the packets bearing the definitive marking and delivered by the encryptor.
